# EUROPEAN PATENT APPLICATION

(11) **EP 4 597 952 A1**
(43) Date of publication of application: **06.08.2025**
(21) Application number: 22960125.7
(22) Date of filing: 29.09.2022
(51) Int. Cl.: H04L 27/00

(54) **WIRELESS COMMUNICATION METHOD AND APPARATUS, AND DEVICE, STORAGE MEDIUM AND PROGRAM PRODUCT**

(71) Applicant: GUANGDONG OPPO MOBILE TELECOMMUNICATIONS CORP., LTD., Dongguan, Guangdong 523860 (CN)
(72) Inventor: WU, Zuomin, Dongguan, Guangdong 523860 (CN)
(74) Representative: Novagraaf Technologies
(86) International application number: PCT/CN2022/122851
(87) International publication number: WO 2024/065489

(57) **Abstract**

A wireless communication method and apparatus, and a device, a storage medium and a program product, which relate to the technical field of communications. The method comprises: a terminal device monitoring and/or receiving a first downlink channel or signal within a first time period (210). For a network device for which a sleep mode can be configured, a terminal device can determine a suitable time period, and monitor and/or receive a downlink channel or signal of the network device within the time period, such that the defect of a delay in communication transmission of the terminal device being too long due to the fact that the network device cannot serve the terminal device for a long period of time in the sleep mode is prevented, thereby improving the transmission performance between the terminal device and the network device.

## Description

### TECHNICAL FIELD

Embodiments of the present disclosure relate to the technical field of communications, and in particular, relate to a method and apparatus for wireless communication, and a device, a storage medium and a program product thereof.

### BACKGROUND

In systems for wireless communication, technologies related to network energy saving have been introduced, and network devices may be in a sleep mode for periods of time, thereby achieving energy saving. Therefore, communication between terminal devices and network devices requires further research.

### SUMMARY

Embodiments of the present disclosure provide a method and apparatus for wireless communication, and a device, a storage medium and a program product thereof. The technical solutions are as follows.

According to some embodiments of the present disclosure, a method for wireless communication is provided. The method is applicable to a terminal device, and includes:
monitoring and/or receiving a first downlink channel or signal within a first time period.

According to some embodiments of the present disclosure, a method for wireless communication is provided. The method is applicable to a network device, and includes:
transmitting first configuration information to a terminal device, wherein the first configuration information is used for determining a first time period to monitor and/or receive a first downlink channel or signal.

According to some embodiments of the present disclosure, an apparatus for wireless communication is provided. The apparatus includes:
a receiving module, configured to monitor and/or receive a first downlink channel or signal within a first time period.

According to some embodiments of the present disclosure, an apparatus for wireless communication is provided. The apparatus includes:
a transmitting module, configured to transmit first configuration information to a terminal device, wherein the first configuration information is used for determining a first time period to monitor and/or receive a first downlink channel or signal.

According to some embodiments of the present disclosure, a terminal device is provided. The terminal device includes a processor and a memory. The memory is configured to store one or more computer programs, wherein the processor, when loading and running the one or more computer programs, is caused to perform the method applicable to the terminal device described above.

According to some embodiments of the present disclosure, a network device is provided. The network device includes a processor and a memory. The memory is configured to store one or more computer programs, wherein the processor, when loading and running the one or more computer programs, is caused to perform the method applicable to the network device described above.

According to some embodiments of the present disclosure, a computer-readable storage medium is provided. The storage medium stores one or more computer programs, wherein the one or more computer programs, when loaded and run by a processor, cause the processor to perform the method applicable to the terminal device or the method applicable to the network device described above.

According to some embodiments of the present disclosure, a chip is provided. The chip includes a programmable logic circuit and/or one or more program instructions, wherein the chip, when running, is caused to perform the method applicable to the terminal device or the method applicable to the network device described above.

According to some embodiments of the present disclosure, a computer program product is provided. The computer program product includes one or more computer instructions stored in a computer-readable storage medium. The one or more computer instructions, when read from the computer-readable storage medium and executed by a processor, cause the processor to perform the method applicable to the terminal device or the method applicable to the network device described above.

According to some embodiments of the present disclosure, a system for wireless communication is provided. The system includes a terminal device and a network device, wherein the terminal device is configured to perform the method applicable to the terminal device described above, and/or the network device is configured to perform the method applicable to the network device described above.

The technical solutions according to the embodiments of the present disclosure achieve the following beneficial effects:
For a network device for which a sleep mode may be configured, a terminal device is capable of determining an appropriate time period, and monitoring and/or receiving a downlink channel or signal of the network device within the time period. In this way, the problem that a communication transmission delay of the terminal device is too long because the network device in the sleep mode is incapable of serving the terminal device for a long time is addressed, such that the performance of data transmission between the terminal device and the network device is improved.

### BRIEF DESCRIPTION OF DRAWINGS

FIG. 1 is a schematic diagram of a network architecture according to some embodiments of the present disclosure;
FIG. 2 is a flowchart of a method for wireless communication according to some embodiments of the present disclosure;
FIG. 3 is a flowchart of a method for wireless communication according to some other embodiments of the present disclosure;
FIG. 4 is a schematic diagram of a monitoring process in the case that a terminal device is configured with a next generation node B wake-up signal (gNB-WUS) resource according to some embodiments of the present disclosure;
FIG. 5 is a schematic diagram of a monitoring process in the case that a terminal device is configured with a user equipment wake-up signal (UE-WUS) resource according to some embodiments of the present disclosure;
FIG. 6 is a schematic diagram of a monitoring process in the case that a terminal device is configured with a gNB-WUS resource and a UE-WUS resource according to some embodiments of the present disclosure;
FIG. 7 is a schematic diagram of a monitoring process in the case that a terminal device is configured with a gNB-WUS resource and a UE-WUS resource according to some other embodiments of the present disclosure;
FIG. 8 is a schematic diagram of a monitoring process in the case that a terminal device is configured with a gNB-WUS resource and a UE-WUS resource according to some other embodiments of the present disclosure;
FIG. 9 is a block diagram of an apparatus for wireless communication according to some embodiments of the present disclosure;
FIG. 10 is a block diagram of an apparatus for wireless communication according to some other embodiments of the present disclosure;
FIG. 11 is a schematic structural diagram of a terminal device according to some embodiments of the present disclosure; and
FIG. 12 is a schematic structural diagram of a network device according to some embodiments of the present disclosure.

### DETAILED DESCRIPTION

For clearer descriptions of the objectives, technical solutions, and advantages of the present disclosure clearer, embodiments of the present disclosure are further described in detail hereinafter with reference to the accompanying drawings.

A network architecture and a service scenario described in the embodiments of the present disclosure are intended to describe the technical solutions according to the embodiments of the present disclosure more clearly, and do not constitute limitations on the technical solutions according to the embodiments of the present disclosure. Those of ordinary skill in the art may understand that, with evolution of the network architecture and emergence of a new service scenario, the technical solutions according to the embodiments of the present disclosure are also applicable to a similar technical problem.

The technical solutions of the embodiments of the present disclosure are applicable to various communication systems, such as a global system for mobile communication (GSM) system, a code-division multiple access (CDMA) system, a wideband code-division multiple access (WCDMA) system, a general packet radio service (GPRS) system, a long-term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN) system, a wireless fidelity (Wi-Fi) system, a 5^{th} generation (5G) system, or another communication system.

Generally, a conventional communication system supports a limited quantity of connections and is easy to implement. However, with development of communication technologies, a mobile communication system supports not only conventional communications modes, but also other communications modes, such as device-to-device (D2D) communications, machine-to-machine (M2M) communications, machine-type communications (MTC), vehicle-to-vehicle (V2V) communications, or vehicle-to-everything (V2X) communications. The embodiments of the present disclosure are also applicable to these communication systems.

The communication system in the embodiments of the present disclosure may be applicable to a carrier aggregation (CA) scenario, a dual connectivity (DC) scenario, and a standalone (SA) networking scenario.

The communication system in the embodiments of the present disclosure may be applicable to an unlicensed spectrum. The unlicensed spectrum may also be considered as a shared spectrum. Alternatively, the communication system in the embodiments of the present disclosure may be applicable to a licensed spectrum. The licensed spectrum may also be considered as an unshared spectrum or a dedicated spectrum.

The embodiments of the present disclosure may be applicable to a terrestrial network (TN) system and the NTN system.

In some embodiments of the present disclosure, a cell may be equivalent to a carrier. For example, a "downlink cell" may be equivalent to a "downlink carrier," and an "uplink cell" may be equivalent to an "uplink carrier."

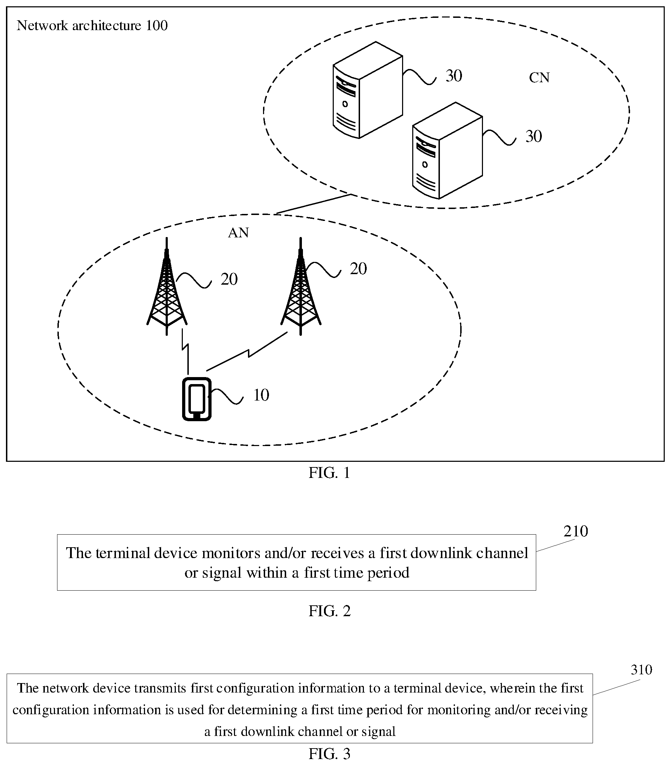

FIG. 1 is a schematic diagram of a network architecture 100 according to some embodiments of the present disclosure. The network architecture 100 may involve a terminal device 10, an access network (AN) device 20, and a core network (CN) device 30.

The terminal device 10 may be a user equipment (UE), an access terminal, a subscriber unit, a subscriber station, a mobile station, a mobile platform, a remote station, a remote terminal, a mobile device, a wireless communication device, a user agent, or a user apparatus. In some embodiments, the terminal device 10 may also be a cellular phone, a cordless phone, a Session Initiation Protocol (SIP) phone, a wireless local loop (WLL) station, a personal digital assistant (PDA), a handheld device with a wireless communication function, a computing device or another processing device connected to a wireless modem, a vehicle-mounted device, a wearable device, a terminal device in a 5G system, a terminal device in an evolved public land mobile network (PLMN), or the like, which is not limited in the embodiments of the present disclosure. For convenience of description, the devices mentioned above are collectively referred to as the terminal device. A plurality of terminal devices 10 are usually deployed. At least one terminal device 10 may be distributed in a cell managed by each AN device 20.

The AN device 20 is a device deployed in an AN to provide a wireless communication function for the terminal device 10. The AN device 20 may include various forms of macro base stations, micro base stations, relay stations, access points, and the like. In systems employing different radio access technologies, devices with a function of the AN device may have different names, for example, gNodeB or gNB in a 5G NR system. As a communication technology evolves, the name "AN device" may change. For convenience of description, in the embodiments of the present disclosure, the above apparatuses providing the wireless communication function for the terminal device 10 are collectively referred to as the AN device. In some embodiments, a communication relationship may be established between the terminal device 10 and the CN device 30 using the AN device 20. For example, in an LTE system, the AN device 20 may be an evolved universal terrestrial radio access network (EUTRAN) or at least one eNodeB in the EUTRAN. In a 5G NR system, the AN device 20 may be a radio access network (RAN) or at least one gNB in the RAN. In the embodiments of the present disclosure, unless otherwise specified, the term "network device" is the AN device 20, such as a base station.

The CN device 30 is a device deployed in a CN. The CN device 30 mainly functions to provide a user connection, user management and service bearing, and to provide an interface to an external network as a bearer network. For example, CN devices in the 5G NR system may include devices such as an access and mobility management function (AMF) entity, a user plane function (UPF) entity, and a session management function (SMF) entity.

In some embodiments, the AN device 20 communicate with the CN device 30 using a specific air interface technology, such as an NG interface in the 5G NR system. The AN device 20 communicates with and the terminal device 10 using a specific air interface technology, such as a Uu interface.

The "5G NR system" in the embodiments of the present disclosure may also be referred to as a 5G system or an NR system, but those skilled in the art may understand its meaning. The technical solutions according to the embodiments of the present disclosure may be applicable to the LTE system, the 5G NR system, an evolved system subsequent to the 5G NR system, a narrowband Internet of things (NB-IoT) system, and other communication systems. This is not limited in the present disclosure.

In the embodiments of the present disclosure, the network device provides a service for a cell. The terminal device communicates with the network device over a transmission resource (for example, a frequency-domain resource or a spectrum resource) on a carrier used by the cell. The cell may be a cell corresponding to the network device (for example, the base station). The cell may belong to a macro base station or a base station corresponding to a small cell. The small cell herein may include a metro cell, a micro cell, a pico cell, a femto cell, and the like. These small cells have the characteristics of small coverage and low transmit power, and are applicable to providing high-rate data transmission services.

Prior to description of the technical solutions of the present disclosure, some background technical knowledge involved in the present disclosure is described. The following related arts, as optional solutions, may be arbitrarily combined with the technical solutions according to the embodiments of the present disclosure, and all fall within the protection scope of the embodiments of the present disclosure. The embodiments of the present disclosure include at least part of the following content.

### 1. Background of network energy saving

The network energy saving is of great significance to environmental sustainability, environmental impact reduction (greenhouse gas emission reduction), and operational expenditure saving. With gradual popularization of 5G in various industrial and geographical regions, a very high data transmission rate needs to be supported to handle a more advanced service and application (such as Extended Reality (XR)). As a result, network deployments become denser, and consequently more antennas, larger bandwidths, and more frequency bands are used. Considering the impacts of the 5G on environment, it is necessary to develop a controlled and new solution to enhance the network energy saving.

For operators, energy consumption contributes to a significant portion of an operational expenditure (OPEX). As indicated by a report by the Global System for Mobile Communications Association (GSMA), energy cost of a mobile network accounts for approximately 23% of a total OPEX. Most of the energy consumption comes from a RAN, and more specifically, from an active antenna unit (AAU). Only a small portion of the energy consumption comes from a data center and fiber optic transmission. Power consumption of one radio access may be divided into two parts: a dynamic part and a static part. The dynamic part only includes power consumption in the case that data is being transmitted or received, and the static part includes power consumption for maintaining necessary operation of a radio access device at all times, including power consumption in the case that no data is being transmitted or received.

Therefore, it is necessary to research and develop a network energy consumption model, a key performance indicator (KPI), an evaluation method, and the like on a network device side to determine and study a network energy-saving technology in a target deployment scenario. A defined power consumption model on a terminal device side may serve as reference. This research should focus on how to achieve more effective dynamic operation and/or semi-static operation, as well as consider at least one network energy-saving technology applicable to a time domain, a frequency domain, a spatial domain, and a power domain, and combine potential terminal device feedback support, potential terminal device auxiliary information, and a technology for information exchange or coordination between network interfaces to achieve finer-grained data transmission and/or reception adaptation.

It is worth noting that this research not only evaluates a potential network energy-saving gain, but also needs to evaluate and balance an impact on network and user performance by observing KPIs such as spectrum efficiency, capability, user perceived throughput (UPT), delay, UE power consumption, complexity, handover performance, call drop rate, initial access performance, and KPI related to SLA security. This research should avoid exerting a significant impact on the above KPIs.

### 2. Network energy-saving technology

In a network energy-saving system, in order to save energy, a network device enters a sleep mode state (or an energy-saving mode) in the case that service load is relatively light or no service load is present. Table 1 schematically shows an energy consumption model for the network device.

**Table 1 Reference energy consumption model for the network device**

| Sleep mode state | Feature | Relative power | Extra transitional energy consumption | Total transition time |
|---|---|---|---|---|
| Deep sleep | No downlink transmission or uplink reception. | P1=1 | E1 | T1 |
| | Sleep time should be greater than total transition time for entering or leaving the deep sleep state. | | | |
| Shallow sleep | No downlink transmission or uplink reception. | P2 | E2 | T2 |
| | The sleep time should be greater than total transition time for entering or leaving the shallow sleep state. | | | |
| | P2>P1 | | | |
| Micro sleep | No downlink transmission or uplink reception. | P3 | 0 | 0 |
| | It is assumed that total transition time for entering or leaving the micro sleep state is 0. | | | |
| Downlink activated | Only downlink transmission. | P4 | NA | NA |
| Uplink activated | Only uplink reception. | P5 | NA | NA |

However, when the network device enters the sleep mode state, in the case that a service or traffic arrives at the terminal device, the terminal device fails to communicate with the network device in a timely manner. As a result, the service or traffic of the terminal device fails to be transmitted for a long time. To solve this problem, in a possible implementation, the network device configures a gNB-WUS resource for the terminal device. Even though the network device enters or is in the sleep mode state, the network device may also detect whether the terminal device has transmitted a wake-up request on this resource. In the case that the service or traffic arrives at the terminal device, the terminal device may transmit the wake-up request to the network device over the gNB-WUS resource, such that the network device knows a transmission requirement of the terminal device.

In the present disclosure, the "sleep mode" is also referred to as an "energy-saving mode,", an "energy-saving state," a "sleep state," a "sleep mode state," a "sleep energy-saving mode," a "sleep energy-saving state," or the like. However, those skilled in the art understand the actual meaning.

FIG. 2 is a flowchart of a method for wireless communication according to some embodiments of the present disclosure. The method may be applicable to a terminal device. The method may include at least one of the following processes.

In process 210, the terminal device monitors and/or receives a first downlink channel or signal within a first time period.

In some embodiments, the terminal device determines the first time period, and monitors and/or receives the first downlink channel or signal within the first time period. For details on how the terminal device determines the first time period, reference may be made to descriptions in the following embodiments.

In some embodiments, the first downlink channel or signal includes at least one of: a physical downlink control channel (PDCCH), a synchronization signal/ physical broadcast channel (PBCH) block (SSB), a channel state information reference signal (CSI-RS), a downlink positioning reference signal (PRS), a tracking reference signal (TRS), a UE-WUS, or a physical downlink shared channel (PDSCH).

In some embodiments, the UE-WUS includes a signal that is transmitted by a network device to the terminal device and used for waking up the terminal device. For example, after the UE-WUS is monitored on a UE-WUS resource, the terminal device monitors the PDCCH on a PDCCH search space associated with the UE-WUS.

In some embodiments, the PDCCH includes at least one of a dedicated PDCCH of the terminal device or a common PDCCH.

In some embodiments, the PDCCH includes a PDCCH carrying hybrid automatic repeat request-acknowledgement (HARQ-ACK) information. In some embodiments, the HARQ-ACK information is acknowledgement (ACK) information.

In some embodiments, the PDSCH includes a PDSCH carrying the HARQ-ACK information. For example, MAC CE information carried in the PDSCH indicates the HARQ-ACK information. In some embodiments, the HARQ-ACK information is the ACK information.

In some embodiments, the HARQ-ACK information is HARQ feedback information for a first uplink channel or signal transmitted by the terminal device.

In some embodiments, the first downlink channel or signal includes the PDCCH, and the process that the terminal device monitors and/or receives the first downlink channel or signal within the first time period includes: monitoring a PDCCH candidate within the first time period.

In some embodiments, the method further includes: transmitting the first uplink channel or signal within the first time period. In some embodiments, subsequent to transmitting the first uplink channel or signal within the first time period, the terminal device monitors and/or receives the first downlink channel or signal within the first time period.

In some embodiments, the first uplink channel or signal includes at least one of: a physical uplink control channel (PUCCH), a sounding reference signal (SRS) (such as an SRS for multiple input multiple output (MIMO) measurement and/or an SRS for uplink positioning), a physical uplink shared channel (PUSCH), or a physical random access channel (PRACH).

In some embodiments, the first uplink channel or signal includes a network device wake-up signal (which is also referred to as a gNB-WUS).

In some embodiments, the gNB-WUS includes a signal that is transmitted by the terminal device to the network device and used for waking up the network device. For example, the terminal device transmits the gNB-WUS to the network device over an uplink resource configured by the network device for the terminal device to transmit the gNB-WUS. Subsequently, the terminal device monitors and/or receives the first downlink channel or signal within the first time period.

**In** some embodiments, the PUSCH includes at least one of a pre-configured configured grant-PUSCH (CG-PUSCH) or a PUSCH scheduled by downlink control information (DCI).

**In** some embodiments, the process that the terminal device monitors and/or receives the first downlink channel or signal within the first time period includes: monitoring and/or receiving a first downlink channel or signal on a first cell within the first time period; or monitoring and/or receiving a first downlink channel or signal corresponding to a first cell within the first time period. The first cell is a serving cell of the terminal device. In some embodiments, the first cell includes one cell, or the first cell includes a plurality of cells.

**In** the technical solutions according to the embodiments of the present disclosure, for a network device for which a sleep mode may be configured, the terminal device is capable of determining an appropriate time period, and monitoring and/or receiving a downlink channel or signal of the network device within the time period. In this way, the problem that a communication transmission delay of the terminal device is too long because the network device in the sleep mode is incapable of serving the terminal device for a long time is addressed, such that the performance of data transmission between the terminal device and the network device is improved.

Determining the first time period includes at least one of the following cases.

### Case 1

**In** some embodiments, the first time period is determined based on a time-domain position of a first uplink resource.

**In** some embodiments, a start position of the first time period is determined based on the time-domain position of the first uplink resource.

**In** some embodiments, the first uplink resource includes a network device wake-up signal resource configured for the terminal device to transmit the network device wake-up signal. For example, the first uplink resource includes the uplink resource configured by the network device for the terminal device to transmit the gNB-WUS.

**In** some embodiments, prior to the process that the terminal device monitors and/or receives the first downlink channel or signal within the first time period, or the terminal device determines the first time period, the method further includes: transmitting the first uplink channel or signal over the first uplink resource. For example, the terminal device transmits the first uplink channel or signal to the network device over the first uplink resource.

**In** some embodiments, the first uplink channel or signal includes the network device wake-up signal. For example, the terminal device transmits the gNB-WUS to the network device over the uplink resource configured by the network device for the terminal device to transmit the gNB-WUS.

In some embodiments, subsequent to the process that the terminal device transmits the first uplink channel or signal over the first uplink resource, the method further includes: determining the start position of the first time period based on the time-domain position of the first uplink resource.

In some embodiments, the start position of the first time period is an end position of the first uplink resource.

In some embodiments, the start position of the first time period is an end position of a time unit in which the first uplink resource is located.

In some embodiments, a first offset value is present between the start position of the first time period and the end position of the first uplink resource. For example, the start position of the first time period is a time-domain position after the end position of the first uplink resource and is offset backwards by the first offset value.

In some embodiments, the first offset value is present between the start position of the first time period and the end position of the time unit in which the first uplink resource is located. For example, the start position of the first time period is a time-domain position after the end position of the time unit in which the first uplink resource is located and is offset backwards by the first offset value.

In some embodiments, the start position of the first time period is a start position of a first downlink resource following the first uplink resource. For example, the start position of the first time period is a start position of a first downlink resource following the first uplink resource.

In some embodiments, the start position of the first time period is a start position of a time unit in which the first downlink resource following the first uplink resource is located. For example, the start position of the first time period is a start position of a time unit in which the first downlink resource following the first uplink resource is located.

In some embodiments, the start position of the first time period is a start position of a first downlink resource that follows the first uplink resource and is offset by the first offset value. For example, the start position of the first time period is a start position of a first downlink resource that follows the first uplink resource and is offset backwards by the first offset value.

In some embodiments, the start position of the first time period is a start position of a time unit in which the first downlink resource that follows the first uplink resource and is offset by the first offset value is located. For example, the start position of the first time period is a start position of a time unit in which the first downlink resource that follows the first uplink resource and is offset backwards by the first offset value is located.

In some embodiments, the first downlink resource includes a resource corresponding to the PDCCH search space and/or a terminal device wake-up signal resource (such as the UE-WUS resource). In some embodiments, the terminal device wake-up signal resource includes at least one of a terminal device- dedicated terminal device wake-up signal resource or a common terminal device wake-up signal resource.

By way of example but not limitation, the first downlink resource is a resource corresponding to a first PDCCH search space after the first uplink resource, or the first downlink resource is a first UE-WUS resource following the first uplink resource.

In addition, in the embodiments of the present disclosure, the time unit includes at least one of a timeslot, a sub-frame, a symbol, or a sub-timeslot. The sub-timeslot includes an integer quantity of symbols. In some embodiments, the symbol includes an orthogonal frequency division multiplexing (OFDM) symbol determined based on a subcarrier spacing. The subcarrier spacing may be predefined or may be configured by the network device.

In some embodiments, the first offset value is predefined. For example, the first offset value is predefined in a protocol, or the first offset value is determined based on a parameter predefined in a protocol. For another example, the first offset value is determined based on processing time of the network device.

In some embodiments, the first offset value is configured by the network device, or the first offset value is determined based on a configuration parameter of the network device.

In some embodiments, the first offset value is a positive number, or the first offset value is a forward offset value.

In some embodiments, the first offset value may be 0.

In some embodiments, the first uplink resource is associated with the sleep mode of the network device. For example, the first uplink resource includes a gNB-WUS resource corresponding to the sleep mode of the network device.

In some embodiments, the first downlink resource is a downlink resource within a third time period corresponding to the sleep mode of the network device.

In some embodiments, the third time period includes a time period within which the network device is in the sleep mode. In some embodiments, the time period within which the network device is in the sleep mode includes a corresponding sleep time period after the network device enters the sleep mode. In some embodiments, the time period within which the network device is in the sleep mode includes a time period corresponding to transition time for the network device to enter the sleep mode, a time period corresponding to transition time for the network device to exit the sleep mode, and the corresponding sleep time period after the network device enters the sleep mode.

In some embodiments, the third time period includes a time period corresponding to transition time for the network device to be in the sleep mode. In some embodiments, the time period corresponding to the transition time for the network device to be in the sleep mode includes the time period corresponding to the transition time for the network device to enter the sleep mode, and/or the time period corresponding to the transition time for the network device to exit the sleep mode.

For the case 1, based on the time-domain position of the first uplink resource, the first time period for monitoring and/or receiving the first downlink channel or signal is determined, or the start position of the first time period is determined. For example, for the network device with the sleep mode, the terminal device is configured with the network device wake-up signal resource (such as the gNB-WUS resource). Based on a time-domain position of the network device wake-up signal resource, the terminal device is capable of determining the first time period for monitoring and/or receiving the first downlink channel or signal, or determining the start position of the first time period.

For example, the terminal device transmits the gNB-WUS to the network device over the gNB-WUS resource. Within the first time period after transmitting the gNB-WUS, the terminal device monitors and/or receives the first downlink channel or signal, such that in the case that the terminal device has a transmission requirement, the network device is woken up to provide a service for the terminal device. In this way, the problem that a communication transmission delay of the terminal device is too long because the network device in the sleep mode is incapable of serving the terminal device for a long time is addressed, such that the performance of data transmission between the terminal device and the network device is improved.

In some embodiments, a time-domain resource of the first time period is determined based on the time-domain position of the first uplink resource. For example, the start position and an end position of the first time period are determined based on the time-domain position of the first uplink resource. Therefore, a position occupied by the first time period in a time domain may be known based on the start position and the end position of the first time period. Alternatively, the start position and a length of the first time period are determined based on the time-domain position of the first uplink resource. Therefore, the position occupied by the first time period in the time domain may also be known based on the start position and the length of the first time period.

### Case 2

In some embodiments, the first time period is determined based on a time-domain position of a first downlink resource.

In some embodiments, a start position of the first time period is determined based on the time-domain position of the first downlink resource.

In some embodiments, the first downlink resource is a downlink resource within a third time period corresponding to the sleep mode of the network device.

For example, the first downlink resource is a first downlink resource within the third time period corresponding to the sleep mode of the network device.

In some embodiments, the third time period includes a time period within which the network device is in the sleep mode. In some embodiments, the time period within which the network device is in the sleep mode includes a corresponding sleep time period after the network device enters the sleep mode. In some embodiments, the time period within which the network device is in the sleep mode includes a time period corresponding to transition time for the network device to enter the sleep mode, a time period corresponding to transition time for the network device to exit the sleep mode, and the corresponding sleep time period after the network device enters the sleep mode.

In some embodiments, the third time period includes a time period corresponding to transition time for the network device to be in the sleep mode. In some embodiments, the time period corresponding to the transition time for the network device to be in the sleep mode includes the time period corresponding to the transition time for the network device to enter the sleep mode, and/or the time period corresponding to the transition time for the network device to exit the sleep mode.

In some embodiments, the start position of the first time period is determined based on a time-domain position of a first downlink resource within the time period within which the network device is in the sleep mode; or the start position of the first time period is determined based on a time-domain position of a first downlink resource within the time period corresponding to the transition time for the network device to be in the sleep mode; or the start position of the first time period is determined based on a time-domain position of a first downlink resource within the time period corresponding to the transition time for the network device to enter the sleep mode.

In some embodiments, the first downlink resource is a first downlink resource within the time period within which the network device is in the sleep mode; or the first downlink resource is a first downlink resource within the time period corresponding to the transition time for the network device to be in the sleep mode.

In some embodiments, prior to the process that the terminal device monitors and/or receives the first downlink channel or signal within the first time period, the method further includes: determining the start position of the first time period. For example, the terminal device determines the start position of the first time period based on a start position of the first downlink resource.

In some embodiments, the start position of the first time period is the start position of the first downlink resource.

In some embodiments, the start position of the first time period is a start position of a time unit in which the first downlink resource is located.

In some embodiments, the start position of the first time period is a start position of a first downlink resource whose start position is after a start position of the third time period and is offset by a second offset value. For example, the start position of the first time period is a start position of a first downlink resource after the start position of the third time period and is offset backwards by the second offset value.

In some embodiments, the start position of the first time period is a start position of a time unit in which the first downlink resource whose start position is after a start position of the third time period and is offset by the second offset value is located. For example, the start position of the first time period is a start position of a time unit in which the first downlink resource after the start position of the third time period and is offset backwards by the second offset value is located.

In some embodiments, the second offset value is predefined. For example, the second offset value is predefined in a protocol, or the second offset value is determined based on a parameter predefined in a protocol. For another example, the second offset value is determined based on processing time of the network device.

In some embodiments, the second offset value is configured by the network device, or the second offset value is determined based on a configuration parameter of the network device.

In some embodiments, the second offset value is a positive number, or the second offset value is a forward offset value.

In some embodiments, the second preset value may be 0.

In some embodiments, the first downlink resource includes a resource corresponding to the PDCCH search space and/or a terminal device wake-up signal resource (such as the UE-WUS resource). In some embodiments, the terminal device wake-up signal resource includes at least one of a terminal device-dedicated terminal device wake-up signal resource or a common terminal device wake-up signal resource.

For the case 2, based on the time-domain position of the first downlink resource, the first time period for monitoring and/or receiving the first downlink channel or signal is determined, or the start position of the first time period is determined. In this way, it is ensured as far as possible that the terminal device successfully receives the first downlink channel or signal transmitted by the network device using the first downlink resource, such that a success rate and reliability of downlink reception are improved.

In some embodiments, for the network device with the sleep mode, the first downlink resource may include the downlink resource within the third time period corresponding to the sleep mode of the network device, such that the terminal device is capable of receiving, as far as possible, a downlink channel or signal that the network device transmits after waking up from the sleep mode.

In some embodiments, a time-domain resource of the first time period is determined based on the time-domain position of the first downlink resource. For example, the start position and an end position of the first time period are determined based on the time-domain position of the first downlink resource. Therefore, a position occupied by the first time period in a time domain may be known based on the start position and the end position of the first time period. Alternatively, the start position and a length of the first time period are determined based on the time-domain position of the first downlink resource. Therefore, the position occupied by the first time period in the time domain may also be known based on the start position and the length of the first time period.

### Case 3

In some embodiments, the first time period is determined based on a third time period corresponding to the sleep mode of the network device.

In some embodiments, the third time period includes a time period within which the network device is in the sleep mode. In some embodiments, the time period within which the network device is in the sleep mode includes a corresponding sleep time period after the network device enters the sleep mode. In some embodiments, the time period within which the network device is in the sleep mode includes a time period corresponding to transition time for the network device to enter the sleep mode, a time period corresponding to transition time for the network device to exit the sleep mode, and the corresponding sleep time period after the network device enters the sleep mode.

**In** some embodiments, the third time period includes a time period corresponding to transition time for the network device to be in the sleep mode. In some embodiments, the time period corresponding to the transition time for the network device to be in the sleep mode includes the time period corresponding to the transition time for the network device to enter the sleep mode, and/or the time period corresponding to the transition time for the network device to exit the sleep mode.

**In** some embodiments, a start position of the first time period is a start position of the third time period; or a second offset value is present between a start position of the first time period and a start position of the third time period.

**In** some embodiments, the third time period includes the time period corresponding to the transition time for the network device to enter the sleep mode; the start position of the first time period is a start position of the time period corresponding to the transition time for the network device to enter the sleep mode; or the second offset value is present between the start position of the first time period and a start position of the time period corresponding to the transition time for the network device to enter the sleep mode.

**In** some embodiments, prior to the process that the terminal device monitors and/or receives the first downlink channel or signal within the first time period, the method further includes: determining the start position of the first time period. For example, the terminal device determines the start position of the first time period based on the third time period corresponding to the sleep mode of the network device. , the terminal device determines the start position of the third time period as the start position of the first time period; or the terminal device determines, as the start position of the first time period, a time-domain position after the start position of the third time period and is offset backwards by the second offset value.

**In** some embodiments, the second offset value is predefined. For example, the second offset value is predefined in a protocol, or the second offset value is determined based on a parameter predefined in a protocol. For another example, the second offset value is determined based on processing time of the network device.

**In** some embodiments, the second offset value is configured by the network device, or the second offset value is determined based on a configuration parameter of the network device.

**In** some embodiments, the second offset value is a positive number, or the second offset value is a forward offset value.

**In** some embodiments, the second preset value may be 0.

For the case 3, based on the third time period corresponding to the sleep mode of the network device, the first time period for monitoring and/or receiving the first downlink channel or signal is determined, or the start position of the first time period is determined. In this way, for the network device with the sleep mode, the terminal device is capable of receiving, as far as possible, a downlink channel or signal that the network device transmits after waking up from the sleep mode.

For the third time period mentioned in at least one of the above cases 1, 2, or 3, a length of the third time period is determined based on at least one of: the configuration parameter of the network device, a communication transmission requirement of the network device, and a communication transmission requirement of the terminal device. For example, the network device pre-configures the length of the third time period. In the case that the network device or the terminal device has a communication transmission requirement, the length of the third time period may be prolonged or shortened based on the communication transmission requirement.

In some embodiments, the communication transmission requirement of the network device includes at least one of: downlink service transmission of the network device to at least one terminal device, uplink service transmission of the network device to at least one terminal device, paging message transmission of the network device, system message transmission of the network device, SSB transmission of the network device, downlink reference signal transmission of the network device, PRACH detection of the network device, or uplink reference signal transmission of the network device.

In some embodiments, the communication transmission requirement of the terminal device includes at least one of: downlink service transmission of the terminal device, uplink service transmission of the terminal device, paging message transmission of the terminal device, system message transmission requested by the terminal device, SSB transmission requested by the terminal device, downlink reference signal transmission of the terminal device, PRACH transmission of the terminal device, and uplink reference signal transmission of the terminal device.

For the first time period mentioned in at least one of the above cases 1, 2, or 3, the length of the first time period may be determined in following manners.

In some embodiments, the length of the first time period is determined based on a length of a first timer, wherein startup or restart time of the first timer is time corresponding to the start position of the first time period. In some embodiments, the length of the first timer and/or the length of the first time period may be configured by the network device. In some embodiments, the length of the first timer is configured over at least one of a system message, radio resource control (RRC) signaling, or a MAC CE. By way of example but not limitation, the terminal device is configured with the first timer and/or the length of the first timer. After transmitting the gNB-WUS to the network device on the first uplink resource, the terminal device starts the first timer from the start position of the first downlink resource after the first uplink resource, and monitors and/or receives the first downlink channel or signal during running time of the first timer. The running time of the first timer is the length of the first timer.

In some embodiments, the length of the first time period is determined based on a length of a first window. A start position of the first window is the start position of the first time period. In some embodiments, the first window and/or the length of the first window may be configured by the network device. In some embodiments, the length of the first window is configured over at least one of the system message, the RRC signaling, or the MAC CE. By way of example but not limitation, the terminal device is configured with the first window and/or the length of the first window. After transmitting the gNB-WUS to the network device on the first uplink resource, the terminal device starts the first window from the start position of the first downlink resource after the first uplink resource, and monitors and/or receives the first downlink channel or signal within the length of the first window.

In some embodiments, the length of the first time period is determined based on the configuration parameter of the network device. For example, the configuration parameter transmitted by the network device to the terminal device may explicitly or implicitly indicate the length of the first time period. In some embodiments, the length of the first time period is configured over at least one of the system message, the RRC signaling, or the MAC CE. By way of example but not limitation, the network device configures, for the terminal device, the length of the corresponding third time period within which the network device enters a first sleep mode, and the length of the first time period is determined based on the length of the third time period.

In some embodiments, the length of the first time period is predefined or is determined based on a predefined parameter.

In some embodiments, for at least one of the above cases 1, 2, or 3, the method further includes: receiving, by the terminal device, indication information that the network device works in the sleep mode; or the terminal device works in the sleep mode in a first cell; or the network device works in the sleep mode.

The following exemplarily describes a behavior of the terminal device.

In some embodiments, the first downlink channel or signal includes a terminal device wake-up signal, and/or a PDCCH candidate corresponding to the PDCCH search space.

In some embodiments, the process that the terminal device monitors and/or receives the first downlink channel or signal within the first time period includes: monitoring, by the terminal device, the terminal device wake-up signal and/or the PDCCH candidate corresponding to the PDCCH search space within the first time period.

For example, the terminal device monitors the PDCCH candidate corresponding to the PDCCH search space within the first time period. In the case that the terminal device detects the PDCCH on the PDCCH search space, the terminal device may communicate with the network device, such as receiving downlink data and/or transmitting uplink data; or the terminal device may assume that the network device has entered a downlink activated state and/or an uplink activated state.

In some embodiments, upon elapse of the first time period, the terminal device does not monitor the terminal device wake-up signal, and/or the terminal device does not monitor the PDCCH candidate corresponding to the PDCCH search space.

In some embodiments, in the case that the terminal device is configured with the terminal device wake-up signal resource, the terminal device monitors the terminal device wake-up signal within the first time period. For example, in the case that the terminal device is configured with the UE-WUS resource, the terminal device monitors the UE-WUS within the first time period.

In some embodiments, the terminal device wake-up signal resource includes the at least one of: the terminal device-dedicated terminal device wake-up signal resource or the common terminal device wake-up signal resource.

In some embodiments, one terminal device wake-up signal resource is associated with one PDCCH search space or one group of PDCCH search spaces. It should be understood that the one PDCCH search space may be considered as one PDCCH search space set, and the one group of PDCCH search spaces may be considered as a plurality of PDCCH search space sets.

In some embodiments, the process that the terminal device monitors the terminal device wake-up signal includes:
monitoring, by the terminal device, a PDCCH candidate corresponding to a PDCCH search space associated with the terminal device wake-up signal in the case that the terminal device wake-up signal is monitored by the terminal device; or
not monitoring, by the terminal device, a PDCCH candidate corresponding to a PDCCH search space associated with the terminal device wake-up signal in the case that the terminal device wake-up signal is not monitored by the terminal device.

In some embodiments, in the case that the terminal device monitors the PDCCH candidate corresponding to the PDCCH search space associated with the terminal device wake-up signal, upon detection of the PDCCH on the PDCCH search space, the terminal device may communicate with the network device, such as receiving the downlink data and/or transmitting the uplink data; or the terminal device may assume that the network device has entered the downlink activated state and/or the uplink activated state.

In some embodiments, upon elapse of the first time period, the terminal device does not monitor the terminal device wake-up signal, and/or the terminal device does not monitor the PDCCH candidate corresponding to the PDCCH search space.

In the embodiments, in the case that the terminal device is configured with the UE-WUS resource, the terminal device monitors the UE-WUS within the first time period to obtain a downlink transmission requirement of the network device.

In some embodiments, in the case that the terminal device is not configured with the terminal device wake-up signal resource, the terminal device monitors the PDCCH candidate corresponding to the PDCCH search space within the first time period. For example, in the case that the terminal device is not configured with the UE-WUS resource, the terminal device monitors the PDCCH candidate corresponding to the PDCCH search space within the first time period.

In some embodiments, the process that the terminal device monitors the PDCCH candidate corresponding to the PDCCH search space within the first time period includes the following cases: in the case that the terminal device detects the PDCCH on the PDCCH search space, the terminal device may communicate with the network device, such as receiving the downlink data and/or transmitting the uplink data; or the terminal device may assume that the network device has entered the downlink activated state and/or the uplink activated state. In some embodiments, upon elapse of the first time period, the terminal device does not monitor the PDCCH candidate on the PDCCH search space.

In some embodiments, upon elapse of the first time period, the terminal device does not monitor the PDCCH candidate corresponding to the PDCCH search space.

In the embodiments, in the case that the terminal device is not configured with the UE-WUS resource but is configured with the PDCCH search space, the terminal device monitors the PDCCH candidate corresponding to the PDCCH search space within the first time period to obtain the downlink transmission requirement of the network device.

In some embodiments, within the first time period, the terminal device monitors a resource whose time-domain position that appears earlier in the terminal device wake-up signal and the PDCCH candidate corresponding to the PDCCH search space.

In some embodiments, the terminal device monitors the terminal device wake-up signal in the case that a time-domain position of the terminal device wake-up signal resource is before a time-domain position of a resource corresponding to the PDCCH search space within the first time period.

In some embodiments, the terminal device monitors the terminal device wake-up signal in the case that a time-domain position of a first terminal device wake-up signal resource is before a time-domain position of a resource corresponding to the first PDCCH search space within the first time period. For example, the terminal device monitors the UE-WUS resource in the case that the first UE-WUS resource is located before the first PDCCH search space in the time domain within the first time period.

In some embodiments, the process that the terminal device monitors the terminal device wake-up signal includes:
monitoring the PDCCH candidate corresponding to the PDCCH search space associated with the terminal device wake-up signal in the case that the terminal device wake-up signal is monitored by the terminal device; or
not monitoring the PDCCH candidate corresponding to the PDCCH search space associated with the terminal device wake-up signal in the case that the terminal device wake-up signal is not monitored by the terminal device.

In some embodiments, in the case that the terminal device monitors the PDCCH candidate corresponding to the PDCCH search space associated with the terminal device wake-up signal, upon detection of the PDCCH on the PDCCH search space, the terminal device may communicate with the network device, such as receiving the downlink data and/or transmitting the uplink data; or the terminal device may assume that the network device has entered the downlink activated state and/or the uplink activated state.

In some embodiments, upon elapse of the first time period, the terminal device does not monitor the terminal device wake-up signal, and/or the terminal device does not monitor the PDCCH candidate corresponding to the PDCCH search space.

In some embodiments, the terminal device monitors the PDCCH candidate corresponding to the PDCCH search space in the case that the time-domain position of the resource corresponding to the PDCCH search space is before the time-domain position of the terminal device wake-up signal resource within the first time period.

In some embodiments, the terminal device monitors the PDCCH candidate corresponding to the PDCCH search space in the case that the time-domain position of the resource corresponding to the first PDCCH search space is before the time-domain position of the first terminal device wake-up signal resource within the first time period. For example, the terminal device monitors a PDCCH search space located before the first UE-WUS resource in the case that the first PDCCH search space is located before the first UE-WUS resource in the time domain within the first time period.

In some embodiments, the terminal device monitors the PDCCH candidate corresponding to the PDCCH search space before the time-domain position of the first terminal device wake-up signal resource within the first time period.

In some embodiments, the terminal device monitors the terminal device wake-up signal starting from the time-domain position of the first terminal device wake-up signal resource within the first time period.

In some embodiments, the process that the terminal device monitors the terminal device wake-up signal starting from the time-domain position of the first terminal device wake-up signal resource within the first time period includes:
monitoring the PDCCH candidate corresponding to the PDCCH search space associated with the terminal device wake-up signal in the case that the terminal device wake-up signal is monitored by the terminal device; or
not monitoring the PDCCH candidate corresponding to the PDCCH search space associated with the terminal device wake-up signal in the case that the terminal device wake-up signal is not monitored by the terminal device.

In some embodiments, in the case that the terminal device monitors the PDCCH candidate corresponding to the PDCCH search space associated with the terminal device wake-up signal, upon detection of the PDCCH on the PDCCH search space, the terminal device may communicate with the network device, such as receiving the downlink data and/or transmitting the uplink data; or the terminal device may assume that the network device has entered the downlink activated state and/or the uplink activated state.

In some embodiments, upon elapse of the first time period, the terminal device does not monitor the terminal device wake-up signal, and/or the terminal device does not monitor the PDCCH candidate corresponding to the PDCCH search space.

In the embodiments, in the case that the terminal device is configured with the UE-WUS resource and the PDCCH search space, the terminal device monitors the resource whose time-domain position appears earlier in the terminal device wake-up signal and the PDCCH candidate corresponding to the PDCCH search space. In this way, the downlink transmission requirement of the network device may be obtained as early as possible, such that a transmission delay is reduced.

In some embodiments, the PDCCH search space is associated with the terminal device wake-up signal. For example, in the case that the terminal device is configured with the terminal device wake-up signal resource, the PDCCH search space is associated with the terminal device wake-up signal.

In some embodiments, the PDCCH search space is associated with the network device wake-up signal. For example, in the case that the terminal device is configured with the network device wake-up signal resource, the PDCCH search space is associated with the network device wake-up signal.

In some embodiments, the PDCCH search space is associated with both the network device wake-up signal and the terminal device wake-up signal. For example, in the case that the terminal device is configured with the terminal device wake-up signal resource and the network device wake-up signal resource, the PDCCH search space is associated with both the network device wake-up signal and the terminal device wake-up signal.

In some embodiments, the first uplink channel or signal is transmitted in accordance with some limitations and regulations.

In some embodiments, an uplink resource within the first time period is not used for transmitting the first uplink channel or signal; or an uplink resource within a second time period is not used for transmitting the first uplink channel or signal. The second time period follows the time-domain position of the first uplink resource and is different from the first time period.

In some embodiments, the uplink resource within the first time period is not an effective resource for transmitting the first uplink signal or signal; or the uplink resource within the second time period is not an effective resource for transmitting the first uplink signal or signal.

In some embodiments, the first uplink channel or signal includes the network device wake-up signal (or the gNB-WUS). In some embodiments, the first uplink resource includes a PUCCH resource or an SRS resource. For example, the terminal device transmits the gNB-WUS to the network device over the PUCCH resource or the SRS resource.

In some embodiments, after transmitting the gNB-WUS, the terminal device does not transmit the gNB-WUS within the first time period; or after transmitting the gNB-WUS, the terminal device does not transmit the gNB-WUS within the second time period.

In some embodiments, a gNB-WUS resource within the first time period is an ineffective gNB-WUS resource; or a gNB-WUS resource within the second time period is an ineffective gNB-WUS resource.

In some embodiments, a start position of the second time period is the same as that of the first time period, and/or a length of the second time period is the same as that of the first time period. In some embodiments, the second time period is determined in a way the same as or similar to the determination of the first time period, which is not described herein any further.

In some embodiments, the terminal device retransmits the first uplink channel or signal after the first time period in the case that the first downlink channel or signal is not monitored and/or received by the terminal device within the first time period. Alternatively, in some embodiments, the terminal device retransmits the first uplink channel or signal after the second time period in the case that the first downlink channel or signal is not monitored and/or received by the terminal device within the first time period.

In some embodiments, the terminal device transmits the gNB-WUS on a gNB-WUS resource after the first time period. For example, the terminal device transmits the gNB-WUS on a first gNB-WUS resource after the first time period.

In some embodiments, the terminal device transmits the gNB-WUS on a gNB-WUS resource after the second time period. For example, the terminal device transmits the gNB-WUS on a first gNB-WUS resource after the second time period.

In some embodiments, the method further includes:
receiving first configuration information from the network device, wherein the first configuration information is used for determining the first time period; and
determining the first time period based on the first configuration information.

In some embodiments, the first configuration information is used for determining the length of the first time period.

In some embodiments, the first configuration information being used for determining the length of the first time period includes the following scenarios: the first configuration information is used for determining the length of the first timer; or the first configuration information is used for determining the length of the first window.

In some embodiments, the first configuration information is used for determining the first uplink resource and/or the first downlink resource.

In some embodiments, the first configuration information is used for determining the network device wake-up signal resource and/or the terminal device wake-up signal resource.

In some embodiments, the first configuration information is used for determining the third time period corresponding to the sleep mode of the network device.

In some embodiments, the first configuration information is used for determining the first offset value and/or the second offset value.

In some embodiments, the first configuration information includes at least one piece of configuration information.

In some embodiments, the first configuration information includes at least one of the system message, the RRC signaling, the MAC CE, or the DCI.

In the above manner, some transmission restrictions are made for transmitting the first uplink channel or signal (including but not limited to the gNB-WUS). The terminal device is prevented from performing unnecessary uplink transmission, such that transmission resources is saved.

FIG. 3 is a flowchart of a method for wireless communication according to some other embodiments of the present disclosure. The method may be applicable to a network device. The method may include at least one of the following processes.

In process 310, the network device transmits first configuration information to a terminal device, wherein the first configuration information is used for determining a first time period for monitoring and/or receiving a first downlink channel or signal.

In some embodiments, the first configuration information is used for determining a length of the first time period.

In some embodiments, the first configuration information being used for determining the length of the first time period includes the following scenarios: the first configuration information is used for determining a length of a first timer, wherein the length of the first time period is the length of the first timer; or the first configuration information is used for determining a length of a first window, wherein the length of the first time period is the length of the first window.

In some embodiments, the first configuration information is used for determining a first uplink resource. The first time period is determined based on a time-domain position of the first uplink resource; or a start position of the first time period is determined based on a time-domain position of the first uplink resource.

In some embodiments, the first uplink resource includes a network device wake-up signal resource, and the first configuration information is used for determining the network device wake-up signal resource.

**In** some embodiments, the method further includes: monitoring a network device wake-up signal on the network device wake-up signal resource.

**In** some embodiments, the method further includes: transmitting a PDCCH to the terminal device over a PDCCH search space in the case that the network device wake-up signal is monitored by the network device; or not transmitting a PDCCH to the terminal device over a PDCCH search space in the case that the network device wake-up signal is not monitored by the network device.

**In** some embodiments, the first configuration information is used for determining a first downlink resource. The first time period is determined based on a time-domain position of the first downlink resource; or the start position of the first time period is determined based on a time-domain position of the first downlink resource.

**In** some embodiments, the first downlink resource includes a terminal device wake-up signal resource, and the first configuration information is used for determining the terminal device wake-up signal resource.

**In** some embodiments, the method further includes: transmitting a terminal device wake-up signal to the terminal device over the terminal device wake-up signal resource within a third time period corresponding to a sleep mode of the network device.

**In** some embodiments, the first configuration information is used for determining the network device wake-up signal resource and the terminal device wake-up signal resource.

**In** some embodiments, the method further includes: transmitting the terminal device wake-up signal to the terminal device over the terminal device wake-up signal resource in the case that the network device wake-up signal is monitored by the network device.

**In** some embodiments, the method further includes: transmitting the terminal device wake-up signal to the terminal device over the terminal device wake-up signal resource in the case that the network device wake-up signal is monitored by the network device and a time-domain position of the terminal device wake-up signal resource is before a time-domain position of a resource corresponding to the PDCCH search space; or
transmitting the PDCCH to the terminal device over the PDCCH search space in the case that the network device wake-up signal is monitored by the network device and a time-domain position of a resource corresponding to the PDCCH search space is before a time-domain position of the terminal device wake-up signal resource; or
neither transmitting the terminal device wake-up signal to the terminal device over the terminal device wake-up signal resource nor transmitting the PDCCH to the terminal device over the PDCCH search space in the case that the network device wake-up signal is not monitored by the network device.

**In** some embodiments, the network device transmits the terminal device wake-up signal to the terminal device over the terminal device wake-up signal resource in the case that the network device wake-up signal is monitored by the network device and a time-domain position of a first terminal device wake-up signal resource is before a time-domain position of a resource corresponding to a first PDCCH search space.

Alternatively, in some embodiments, the network device transmits the PDCCH to the terminal device over the PDCCH search space in the case that the network device wake-up signal is monitored by the network device and a time-domain position of a resource corresponding to a first PDCCH search space is before a time-domain position of a first terminal device wake-up signal resource.

**In** some embodiments, the method further includes: transmitting the PDCCH to the terminal device over the PDCCH search space before the time-domain position of the first terminal device wake-up signal resource; or
transmitting the terminal device wake-up signal to the terminal device over the terminal device wake-up signal resource starting from the time-domain position of the first terminal device wake-up signal resource.

**In** some embodiments, after the network device transmits the terminal device wake-up signal to the terminal device over the terminal device wake-up signal resource, the method further includes: transmitting the PDCCH to the terminal device over a PDCCH search space associated with the terminal device wake-up signal.

**In** some embodiments, the PDCCH search space is a PDCCH search space associated with the network device wake-up signal.

**In** some embodiments, the first configuration information is used for determining the third time period corresponding to the sleep mode of the network device, and the first time period is determined based on the third time period.

**In** some embodiments, the third time period includes a time period within which the network device is in the sleep mode; or the third time period includes a time period corresponding to transition time for the network device to enter the sleep mode, and/or a time period corresponding to transition time for the network device to exit the sleep mode.

**In** some embodiments, the first configuration information is used for determining a first offset value and/or a second offset value. The first offset value and/or the second offset value are/is used for determining the first time period.

**In** some embodiments, the first configuration information includes at least one piece of configuration information.

**In** some embodiments, the first configuration information includes at least one of a system message, RRC signaling, a MAC CE, or DCI.

For details not described in the embodiments on a network device side, reference may be made to the above method embodiments on a terminal device side.

The following describes the technical solutions of the present disclosure using a plurality of exemplary embodiments.

**In** some exemplary embodiments, a terminal device is configured with a gNB-WUS resource for transmitting a gNB-WUS to a network device. For ease of description, in these embodiments, a frequency division duplexing (FDD) system is taken as an example (that is, the terminal device is configured with uplink and downlink carriers). It should be understood that these embodiments may also be applicable to a time division duplexing (TDD) system, which is not limited in the present disclosure.

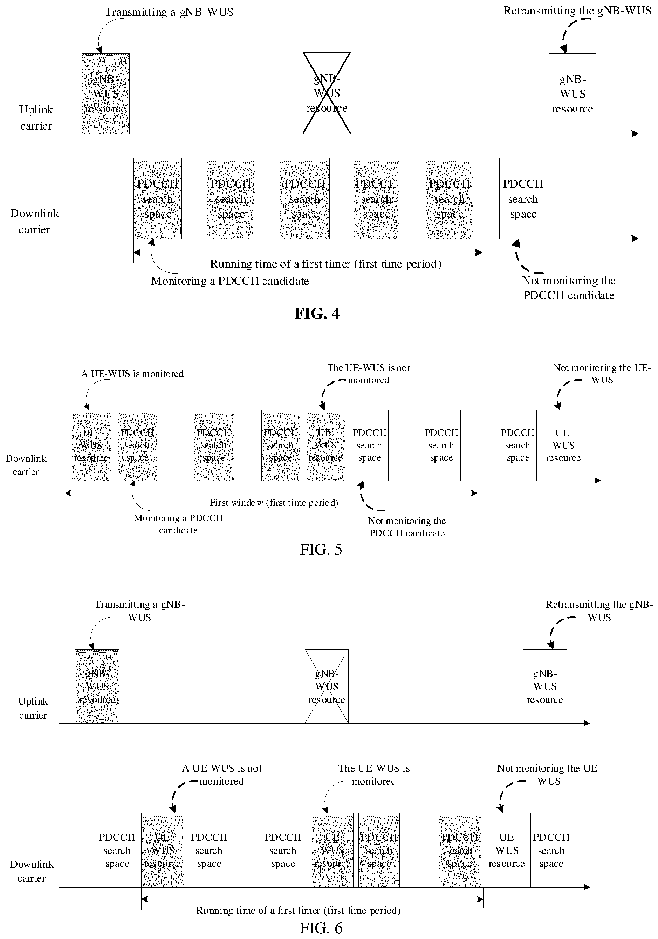

As shown in FIG. 4, the terminal device is configured with the gNB-WUS resource on the uplink carrier and a PDCCH search space on the downlink carrier. After the terminal device transmits the gNB-WUS on a gNB-WUS resource (for example, in the case that the terminal device has a requirement for downlink synchronization or uplink service transmission, the terminal device transmits the gNB-WUS on the gNB-WUS resource to wake up the network device), and then the terminal device starts a first timer from a start position of a first PDCCH search space after trasnmitting the gNB-WUS. During running time of the first timer, the terminal device monitors the PDCCH search space.

**In** some embodiments, the gNB-WUS resource used by the terminal device to transmit the gNB-WUS is an effective gNB-WUS resource. For example, the gNB-WUS resource is a gNB-WUS resource when the network device is in a sleep mode state.

**In** some embodiments, the PDCCH search space includes a terminal device-dedicated PDCCH search space and/or a common PDCCH search space.

**In** some embodiments, the PDCCH search space includes a search space associated with a specific radio network temporary identifier (RNTI). For example, the PDCCH search space includes a search space associated with a cell-radio network temporary identifier (C-RNTI), a configured scheduling radio network temporary identifier (CS-RNTI), or a modulation and coding scheme cell-radio network temporary identifier (MCS C-RNTI).

**In** some embodiments, in the case that the terminal device receives, within the PDCCH search space during the running time of the first timer, the PDCCH from the network device, the terminal device may communicate with the network device, such as receiving downlink data and/or transmitting uplink data; or the terminal device may assume that the network device has entered a downlink activated state and/or an uplink activated state.

In some embodiments, in the case that the terminal device receives, within the PDCCH search space during the running time of the first timer, the PDCCH from the network device, the first timer may be restarted or its running time may be prolonged.

In some embodiments, in the case that the terminal device does not receive, within the PDCCH search space during the running time of the first timer, the PDCCH from the network device, the terminal device may retransmit the gNB-WUS over a gNB-WUS resource after the running time of the first timer ends.

In some embodiments, upon elapse of the running time of the first timer, the terminal device no longer monitors the PDCCH search space.

In some embodiments, a gNB-WUS resource during the running time of the first timer is an ineffective gNB-WUS resource; or the terminal device fails to transmit the gNB-WUS over a gNB-WUS resource during the running time of the first timer.

In the embodiments, in the case that the network device is in the sleep mode, the terminal device may transmit a wake-up signal to the network device over the gNB-WUS resource. In this way, the network device may know a transmission requirement of the terminal device, such that the problem that a communication transmission delay of the terminal device is too long because the network device is incapable of serving the terminal device for a long time in the sleep mode state is addressed.

In some other exemplary embodiments, a terminal device is configured with a UE-WUS resource for transmitting a UE-WUS to a network device. For ease of description, in these embodiments, an FDD system is taken as an example (that is, the terminal device is configured with uplink and downlink carriers). It should be understood that these embodiments may also be applicable to a TDD system, and this is not limited in the present disclosure.

As shown in FIG. 5, the terminal device is configured with the UE-WUS resource and a PDCCH search space on the downlink carrier. The terminal device obtains information of a first time period (in this example, the information of the first time period may be information of a first window, for example, the first window may be a time window for the network device to decide to enter a sleep mode state, and the terminal device may obtain the information of the first window based on configuration information of the network device). Within the first time period, the terminal device monitors the UE-WUS on the UE-WUS resource (in this example, in the case that the network device wakes up from the sleep mode state, the UE-WUS may be transmitted over the UE-WUS resource to wake up the terminal device).

**In** some embodiments, the UE-WUS resource is a common UE-WUS resource. For example, the network devices may wake up a group of terminal devices or all terminal devices in a cell by transmitting the UE-WUS on the UE-WUS resource.

**In** some embodiments, the UE-WUS resource is a terminal device-dedicated UE-WUS resource. For example, the network devices may wake up the terminal device by transmitting the UE-WUS on the UE-WUS resource.

**In** the case that the UE-WUS is monitored by the terminal device on a UE-WUS resource within the first window, the terminal device monitors a PDCCH search space associated with the UE-WUS resource; and/or in the case that the UE-WUS is not monitored by the terminal device on the UE-WUS resource within the first window, the terminal device does not monitor the PDCCH search space associated with the UE-WUS resource.

**In** some embodiments, in the case that the terminal device receives, within the PDCCH search space, a PDCCH from the network device, the terminal device may communicate with the network device, such as receiving downlink data and/or transmitting uplink data; or the terminal device may assume that the network device has entered a downlink activated state and/or an uplink activated state.

**In** some embodiments, the PDCCH search space includes a terminal device-dedicated PDCCH search space and/or a common PDCCH search space.

**In** some embodiments, the PDCCH search space includes a search space associated with a specific RNTI. For example, the PDCCH search space includes a search space associated with a C-RNTI, a CS-RNTI, or an MCS C-RNTI.

**In** some embodiments, in the case that the terminal device receives, within the PDCCH search space within the first window, the PDCCH from the network device, a length of the first window may be prolonged.

**In** some embodiments, after the first window, the terminal device no longer monitors the UE-WUS resource.

**In** some embodiments, the UE-WUS resource used by the network device to transmit the UE-WUS is an effective UE-WUS resource; or the UE-WUS resource within the first window is an effective UE-WUS resource.

**In** some embodiments, a UE-WUS resource beyond the first window is an ineffective UE-WUS resource; or the terminal device does not monitor a UE-WUS resource after the first window.

In the embodiments, in the case that the network device wakes up from the sleep mode state, the network device may transmit the UE-WUS on the UE-WUS resource to wake up the terminal device. In this way, the terminal device is capable of performing downlink and/or uplink transmission with the network device, such that the problem that a communication transmission delay of the terminal device is too long because the network device in the sleep mode is incapable of serving the terminal device for a long time is addressed.

In some other exemplary embodiments, a terminal device is configured with a gNB-WUS resource and a UE-WUS resource. The gNB-WUS resource is used by the terminal device to transmit a gNB-WUS to a network device, and the UE-WUS resource is used by the network device to transmit a UE-WUS to the terminal device. For ease of description, in these embodiments, an FDD system is taken as an example (that is, the terminal device is configured with uplink and downlink carriers). It should be understood that these embodiments may also be applicable to a TDD system, and this is not limited in the present disclosure.

As shown in FIG. 6, the terminal device is configured with the gNB-WUS resource on the uplink carrier, as well as the UE-WUS resource and a PDCCH search space on the downlink carrier. After the terminal device transmits the gNB-WUS on a gNB-WUS resource (for example, in the case that the terminal device has a requirement for downlink synchronization or uplink service transmission, the terminal device may transmit the gNB-WUS on the gNB-WUS resource to wake up the network device), the terminal device may start a first timer. During running time of the first timer, the terminal device monitors a downlink channel or signal.

In some examples, the terminal device may start the first timer from a start position of a first UE-WUS resource after transmitting the gNB-WUS. During the running time of the first timer, the terminal device monitors the UE-WUS resource, as shown in FIG. 6.

In some embodiments, in the case that the UE-WUS is monitored by the terminal device on a UE-WUS resource during the running time of the first timer, the terminal device monitors a PDCCH search space associated with the UE-WUS resource; and/or in the case that the UE-WUS is not monitored by the terminal device on the UE-WUS resource during the running time of the first timer, the terminal device does not monitor the PDCCH search space associated with the UE-WUS resource.

In some examples, the terminal device may start the first timer from a start position of a UE-WUS resource or PDCCH search space that appears first after the gNB-WUS is transmitted. During the running time of the first timer, the terminal device monitors the UE-WUS resource or a PDCCH candidate, for example, the terminal device monitors the UE-WUS resource or PDCCH search space that appears first.

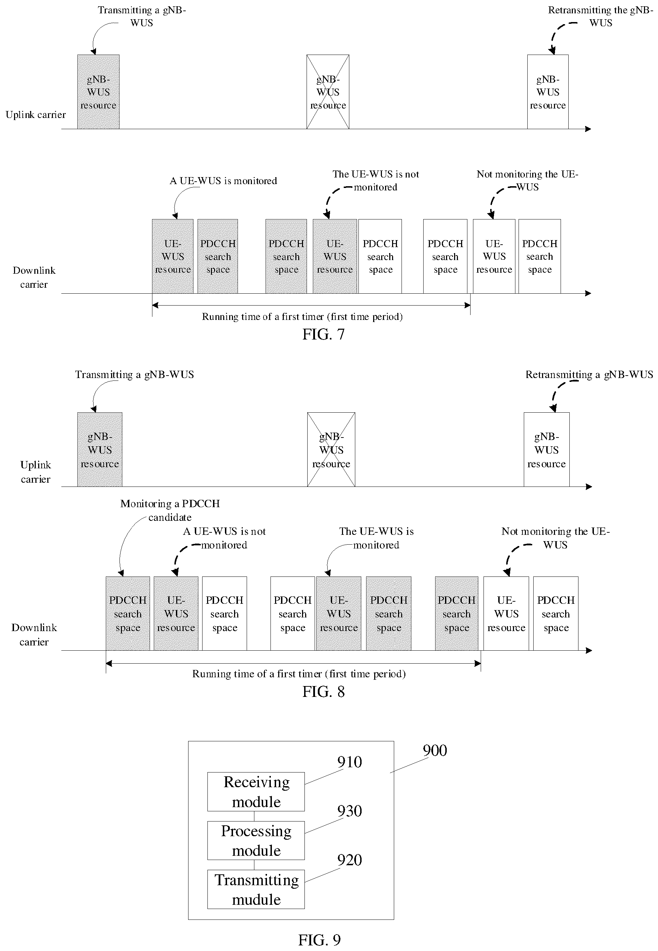

By way of example but not limitation, as shown in FIG. 7, in the case that the first UE-WUS resource is located before a first PDCCH search space, startup time of the first timer is start time of the first UE-WUS resource, and the terminal device preferentially monitors the UE-WUS resource during the running time of the first timer.

**In** some embodiments, in the case that the UE-WUS is monitored by the terminal device on the UE-WUS resource during the running time of the first timer, the terminal device monitors a PDCCH search space associated with the UE-WUS resource; and/or in the case that the UE-WUS is not monitored by the terminal device on the UE-WUS resource during the running time of the first timer, the terminal device does not monitor the PDCCH search space associated with the UE-WUS resource.

By way of example but not limitation, as shown in FIG. 8, in the case that the first PDCCH search space is located before the first UE-WUS resource, the startup time of the first timer is start time of the first PDCCH search space, and the terminal device preferentially monitors the PDCCH candidate during the running time of the first timer. In some embodiments, the terminal device monitors the PDCCH search space within a time period from start running time of the first timer to the start position of the first UE-WUS resource.

**In** some embodiments, the terminal device preferentially monitors the UE-WUS resource starting from the first UE-WUS resource during the running time of the first timer.

**In** some embodiments, in the case that the UE-WUS is monitored by the terminal device on the UE-WUS resource during the running time of the first timer, the terminal device monitors the PDCCH search space associated with the UE-WUS resource; and/or in the case that the UE-WUS is not monitored by the terminal device on the UE-WUS resource during the running time of the first timer, the terminal device does not monitor the PDCCH search space associated with the UE-WUS resource.

**In** some embodiments, the gNB-WUS resource used by the terminal device to transmit the gNB-WUS is an effective gNB-WUS resource. For example, the gNB-WUS resource is a gNB-WUS resource when the network device is in a sleep mode state.

**In** some embodiments, the PDCCH search space includes a terminal device-dedicated PDCCH search space and/or a common PDCCH search space.

**In** some embodiments, the PDCCH search space includes a search space associated with a specific RNTI. For example, the PDCCH search space includes a search space associated with a C-RNTI, a CS-RNTI, or an MCS C-RNTI.

**In** some embodiments, in the case that the terminal device receives, within the PDCCH search space during the running time of the first timer, a PDCCH form the network device, the terminal device may communicate with the network device, such as receiving downlink data and/or transmitting uplink data; or the terminal device may assume that the network device has entered a downlink activated state and/or an uplink activated state.

**In** some embodiments, in the case that the terminal device receives, within the PDCCH search space during the running time of the first timer, the PDCCH from the network device, the first timer may be restarted or its running time may be prolonged.

**In** some embodiments, in the case that the terminal device does not receive, within the PDCCH search space during the running time of the first timer, the PDCCH from the network device, or the terminal device does not receive, on the UE-WUS resource during the running time of the first timer, the UE-WUS sent by the network device, the terminal device may retransmit the gNB-WUS over a gNB-WUS resource after the running time of the first timer ends.

**In** some embodiments, upon elapse of the running time of the first timer, the terminal device no longer monitors the UE-WUS resource and/or the PDCCH search space.

**In** some embodiments, a gNB-WUS resource during the running time of the first timer is an ineffective gNB-WUS resource; or the terminal device fails to transmit the gNB-WUS over a gNB-WUS resource during the running time of the first timer.

**In** some embodiments, the UE-WUS resource used by the network device to transmit the UE-WUS is an effective UE-WUS resource; or the UE-WUS resource during the running time of the first timer is an effective UE-WUS resource.

**In** some embodiments, a UE-WUS resource after the running time of the first timer ends is an ineffective UE-WUS resource; or the terminal device does not monitor a UE-WUS resource after the running time of the first timer ends.

**In** the embodiments, in the case that the terminal device is configured with the gNB-WUS resource and the UE-WUS resource, the network device may enter an active state based on a gNB-WUS of at least one terminal device, and thus may serve terminal devices with service requirements including the at least one terminal device in a system. In this way, the problem that a communication transmission delay of the terminal device is too long because the network device in the sleep mode is incapable of serving the terminal device for a long time is addressed.

It should be noted that the above processes performed by the terminal device may be separately implemented as the method for wireless communication on the terminal device side, and the above processes performed by the network device may be separately implemented as the method for wireless communication on the network device side.

The following are embodiments illustrating the according to the present disclosure, which may be used to perform the method embodiments of the present disclosure. For details not disclosed in the apparatus embodiments of the present disclosure, reference may be made to the method embodiments of the present disclosure.

FIG. 9 is a block diagram of an apparatus for wireless communication according to some embodiments of the present disclosure. The apparatus has functions for implementing the method examples on the terminal device side. The function may be implemented by hardware or by hardware executing corresponding software. The apparatus may be the terminal device described above or may be provided in the terminal device. As shown in FIG. 9, the apparatus 900 may include a receiving module 910.

The receiving module 910 is configured to monitor and/or receive a first downlink channel or signal within a first time period.

**In** some embodiments, the first time period is determined based on a time-domain position of a first uplink resource.

**In** some embodiments, the first time period being determined based on the time-domain position of the first uplink resource includes the following scenarios: a time-domain resource of the first time period is determined based on the time-domain position of the first uplink resource; or a start position of the first time period is determined based on the time-domain position of the first uplink resource.

**In** some embodiments, the start position of the first time period being determined based on the time-domain position of the first uplink resource includes the following scenarios:
the start position of the first time period is an end position of the first uplink resource; or
the start position of the first time period is an end position of a time unit in which the first uplink resource is located; or
a first offset value is present between the start position of the first time period and an end position of the first uplink resource; or
a first offset value is present between the start position of the first time period and an end position of a time unit in which the first uplink resource is located; or
the start position of the first time period is a start position of a first downlink resource after the first uplink resource; or
the start position of the first time period is a start position of a time unit in which a first downlink resource after the first uplink resource is located; or
the start position of the first time period is a start position of a first downlink resource that is after the first uplink resource and is offset by a first offset value; or
the start position of the first time period is a start position of a time unit in which a first downlink resource that follows the first uplink resource and experiences a first offset value is located.

**In** some embodiments, the first offset value is determined based on a parameter predefined in a protocol; or the first offset value is determined based on a configuration parameter of a network device.

**In** some embodiments, as shown in FIG. 9, the apparatus 900 further includes a transmitting module 920 configured to transmit a first uplink channel or signal over the first uplink resource.

**In** some embodiments, as shown in FIG. 9, the apparatus 900 further includes a processing module 930 configured to determine the start position of the first time period based on the time-domain position of the first uplink resource.

**In** some embodiments, an uplink resource within the first time period is not used for transmitting the first uplink channel or signal; or an uplink resource within a second time period is not used for transmitting the first uplink channel or signal. The second time period follows the time-domain position of the first uplink resource and is different from the first time period.

**In** some embodiments, as shown in FIG. 9, the apparatus 900 further includes the transmitting module 920, which is configured to: retransmit the first uplink channel or signal after the first time period in the case that the first downlink channel or signal is not monitored and/or received by the terminal device within the first time period; or retransmit the first uplink channel or signal after the second time period in the case that the first downlink channel or signal is not monitored and/or received by the terminal device within the first time period, wherein the second time period follows the time-domain position of the first uplink resource and is different from the first time period.

**In** some embodiments, the first uplink resource includes a network device wake-up signal resource used by the terminal device to transmit a network device wake-up signal; and/or the first uplink channel or signal includes a network device wake-up signal.

**In** some embodiments, the first time period is determined based on a time-domain position of a first downlink resource.

**In** some embodiments, the first time period being determined based on the time-domain position of the first downlink resource includes the following scenarios: the time-domain resource of the first time period is determined based on the time-domain position of the first downlink resource; or the start position of the first time period is determined based on the time-domain position of the first downlink resource.

**In** some embodiments, the first downlink resource is a downlink resource within a third time period corresponding to a sleep mode of the network device.

**In** some embodiments, the start position of the first time period being determined based on the time-domain position of the first downlink resource includes the following scenarios:
the start position of the first time period is a start position of the first downlink resource; or
the start position of the first time period is a start position of a time unit in which the first downlink resource is located; or
the start position of the first time period is a start position of a first downlink resource whose start position is after a start position of the third time period and is offset by a second offset value; or
the start position of the first time period is a start position of a time unit in which a first downlink resource whose start position is after a start position of the third time period and is offset by a second offset value is located.

**In** some embodiments, the first time period is determined based on the third time period corresponding to the sleep mode of the network device.

**In** some embodiments, the third time period includes: a time period within which the network device is in the sleep mode; or a time period corresponding to a transition time for the network device to enter the sleep mode, and/or a time period corresponding to a transition time for the network device to exit the sleep mode.

**In** some embodiments, the third time period includes a time period corresponding to the transition time for the network device to enter the sleep mode. The start position of the first time period is the start position of the third time period; or the second offset value is present between the start position of the first time period and the start position of the third time period.

**In** some embodiments, the second offset value is determined based on the parameter predefined in the protocol; or the second offset value is determined based on the configuration parameter of the network device.

**In** some embodiments, a length of the third time period is determined based on at least one of: the configuration parameter of the network device, a communication transmission requirement of the network device, or a communication transmission requirement of the terminal device.

The communication transmission requirement of the network device includes at least one of: downlink service transmission of the network device to at least one terminal device, uplink service transmission of the network device to at least one terminal device, paging message transmission of the network device, system message transmission of the network device, SSB transmission of the network device, downlink reference signal transmission of the network device, PRACH detection of the network device, or uplink reference signal transmission of the network device.

The communication transmission requirement of the terminal device includes at least one of: downlink service transmission of the terminal device, uplink service transmission of the terminal device, paging message transmission of the terminal device, system message transmission requested by the terminal device, SSB transmission requested by the terminal device, downlink reference signal transmission of the terminal device, PRACH transmission of the terminal device, or uplink reference signal transmission of the terminal device.

**In** some embodiments, as shown in FIG. 9, the apparatus 900 further includes the processing module 930 configured to determine a start position of the first time period.

**In** some embodiments, a length of the first time period is determined based on a length of a first timer, wherein a startup or restart time of the first timer is a time corresponding to the start position of the first time period; or a length of the first time period is determined based on a length of a first window, wherein a start position of the first window is a start position of the first time period.

**In** some embodiments, a length of the first time period is determined based on a configuration parameter of the network device.

**In** some embodiments, the first downlink resource is a terminal device wake-up signal resource configured for the terminal device; or the first downlink resource is a resource corresponding to a PDCCH search space configured for the terminal device.

**In** some embodiments, the receiving module 910 is configured to monitor a terminal device wake-up signal and/or a PDCCH candidate corresponding to a PDCCH search space within the first time period.

**In** some embodiments, the receiving module 910 is configured to monitor the terminal device wake-up signal within the first time period in the case that the terminal device is configured with a terminal device wake-up signal resource; or monitor the PDCCH candidate corresponding to the PDCCH search space within the first time period in the case that the terminal device is not configured with a terminal device wake-up signal resource.

**In** some embodiments, the receiving module 910 is configured to: monitor the terminal device wake-up signal in the case that a time-domain position of the terminal device wake-up signal resource is before a time-domain position of a resource corresponding to the PDCCH search space within the first time period; or monitor the PDCCH candidate corresponding to the PDCCH search space in the case that a time-domain position of a resource corresponding to the PDCCH search space is before a time-domain position of a terminal device wake-up signal resource within the first time period.

**In** some embodiments, the receiving module 910 is configured to: monitor the terminal device wake-up signal in the case that a time-domain position of a first terminal device wake-up signal resource is before a time-domain position of a resource corresponding to a first PDCCH search space within the first time period; or monitor the PDCCH candidate corresponding to the PDCCH search space in the case that a time-domain position of a resource corresponding to a first PDCCH search space is before a time-domain position of a first terminal device wake-up signal resource within the first time period.

**In** some embodiments, the receiving module 910 is configured to: monitor the PDCCH candidate corresponding to the PDCCH search space before the time-domain position of the first terminal device wake-up signal resource; or monitor the terminal device wake-up signal starting from the time-domain position of the first terminal device wake-up signal resource.

**In** some embodiments, the receiving module 910 is configured to: monitor a PDCCH candidate corresponding to a PDCCH search space associated with the terminal device wake-up signal in the case that the terminal device wake-up signal is monitored by the terminal device; or not monitor a PDCCH candidate corresponding to a PDCCH search space associated with the terminal device wake-up signal in the case that the terminal device wake-up signal is not monitored by the terminal device.

**In** some embodiments, the terminal device does not monitor the terminal device wake-up signal and/or the PDCCH candidate corresponding to the PDCCH search space upon elapse of the first time period.

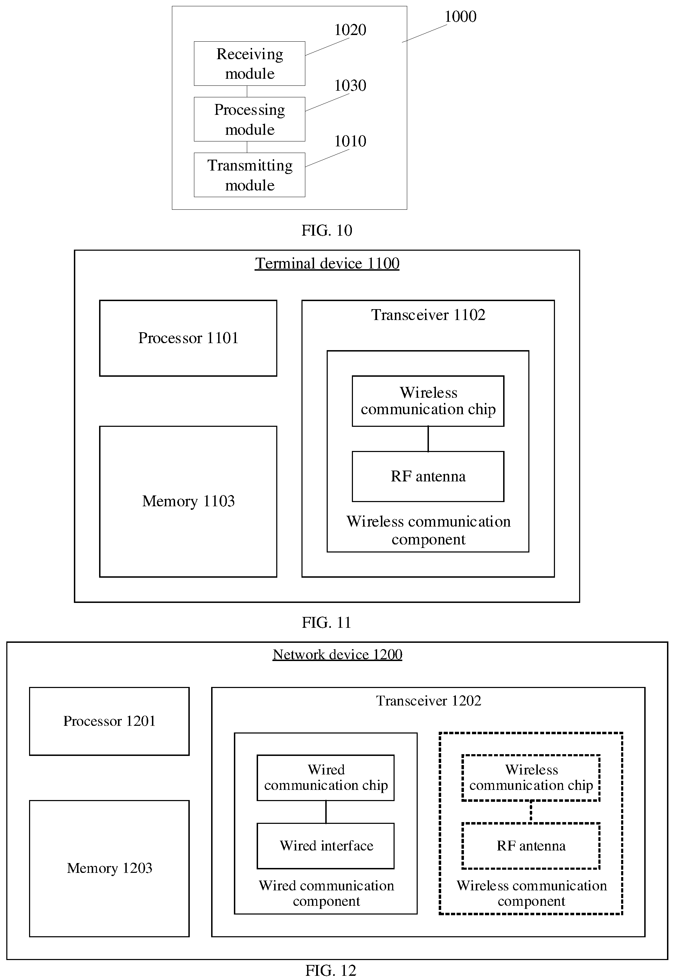

FIG. 10 is a block diagram of an apparatus for wireless communication according to some other embodiments of the present disclosure. The apparatus has functions for implementing the method examples on the network device side. The function may be implemented by hardware or by hardware executing corresponding software. The apparatus may be the network device described above or may be provided in the network device. As shown in FIG. 10, the apparatus 1000 may include a transmitting module 1010.

The transmitting module 1010 is configured to transmit first configuration information to a terminal device, wherein the first configuration information is used for determining a first time period to monitor and/or receive a first downlink channel or signal.

**In** some embodiments, the first configuration information is used for determining a length of the first time period.

**In** some embodiments, the first configuration information being used for determining the length of the first time period includes the following scenarios: the first configuration information is used for determining a length of a first timer, wherein the length of the first time period is the length of the first timer; or the first configuration information is used for determining a length of a first window, wherein the length of the first time period is the length of the first window.

**In** some embodiments, the first configuration information is used for determining a first uplink resource; and the first time period is determined based on a time-domain position of the first uplink resource.

**In** some embodiments, a time-domain resource of the first time period is determined based on the time-domain position of the first uplink resource; or a start position of the first time period is determined based on the time-domain position of the first uplink resource.

**In** some embodiments, the first uplink resource includes a network device wake-up signal resource, and the first configuration information is used for determining the network device wake-up signal resource.

**In** some embodiments, as shown in FIG. 10, the apparatus 1000 further includes a receiving module 1020 configured to monitor a network device wake-up signal on the network device wake-up signal resource.

**In** some embodiments, as shown in FIG. 10, the apparatus 1000 further includes a processing module 1030. The transmitting module 1010 is further configured to transmit a PDCCH to the terminal device over a PDCCH search space in the case that the network device wake-up signal is monitored by the network device. The processing module 1030 is configured to not transmit the PDCCH to the terminal device over the PDCCH search space in the case that the network device wake-up signal is not monitored by the network device.

**In** some embodiments, the first configuration information is used for determining a first downlink resource; and the first time period is determined based on a time-domain position of the first downlink resource.

**In** some embodiments, the time-domain resource of the first time period is determined based on the time-domain position of the first downlink resource; or the start position of the first time period is determined based on the time-domain position of the first downlink resource.

**In** some embodiments, the first downlink resource includes a terminal device wake-up signal resource, and the first configuration information is used for determining the terminal device wake-up signal resource.

In some embodiments, the transmitting module 1010 is further configured to transmit a terminal device wake-up signal to the terminal device over the terminal device wake-up signal resource within a third time period corresponding to a sleep mode of the network device.

In some embodiments, the first configuration information is used for determining the network device wake-up signal resource and the terminal device wake-up signal resource.

In some embodiments, the transmitting module 1010 is further configured to transmit the terminal device wake-up signal to the terminal device over the terminal device wake-up signal resource in the case that the network device wake-up signal is monitored by the network device.

In some embodiments, as shown in FIG. 10, the apparatus 1000 further includes the processing module 1030. The transmitting module 1010 is further configured to transmit the terminal device wake-up signal to the terminal device over the terminal device wake-up signal resource in the case that the network device wake-up signal is monitored by the network device and a time-domain position of the terminal device wake-up signal resource is before a time-domain position of a resource corresponding to the PDCCH search space. Alternatively, the transmitting module 1010 is further configured to transmit the PDCCH to the terminal device over the PDCCH search space in the case that the network device wake-up signal is monitored by the network device and a time-domain position of a resource corresponding to the PDCCH search space is before a time-domain position of the terminal device wake-up signal resource. Alternatively, the processing module 1030 is configured to neither transmit the terminal device wake-up signal to the terminal device over the terminal device wake-up signal resource nor transmit the PDCCH to the terminal device over the PDCCH search space in the case that the network device wake-up signal is not monitored by the network device.

In some embodiments, the transmitting module 1010 is further configured to: transmit the terminal device wake-up signal to the terminal device over the terminal device wake-up signal resource in the case that the network device wake-up signal is monitored by the network device and a time-domain position of a first terminal device wake-up signal resource is before a time-domain position of a resource corresponding to a first PDCCH search space; or transmit the PDCCH to the terminal device over the PDCCH search space in the case that the network device wake-up signal is monitored by the network device and a time-domain position of a resource corresponding to a first PDCCH search space is before a time-domain position of a first terminal device wake-up signal resource.

In some embodiments, the transmitting module 1010 is further configured to: transmit the PDCCH to the terminal device over the PDCCH search space before the time-domain position of the first terminal device wake-up signal resource; or transmit the terminal device wake-up signal to the terminal device over the terminal device wake-up signal resource starting from the time-domain position of the first terminal device wake-up signal resource.

In some embodiments, the transmitting module 1010 is further configured to transmit the PDCCH to the terminal device over a PDCCH search space associated with the terminal device wake-up signal after the terminal device wake-up signal is transmitted to the terminal device over the terminal device wake-up signal resource.

In some embodiments, the PDCCH search space is a PDCCH search space associated with the network device wake-up signal.

In some embodiments, the first configuration information is used for determining the third time period corresponding to the sleep mode of the network device, and the first time period is determined based on the third time period.

In some embodiments, the third time period includes: a time period within which the network device is in the sleep mode; or a time period corresponding to a transition time for the network device to enter the sleep mode, and/or a time period corresponding to a transition time for the network device to exit the sleep mode.

In some embodiments, the first configuration information is used for determining a first offset value and/or a second offset value. The first offset value and/or the second offset value are/is used for determining the first time period.

In some embodiments, the first configuration information includes at least one piece of configuration information.

In some embodiments, the first configuration information includes at least one of a system message, RRC signaling, a MAC CE, or DCI.

It should be noted that when the apparatus according to the foregoing embodiments implements its functions, division of the functional modules is merely exemplary. In practice, the functions may be assigned to and implemented by different functional modules as required, that is, an internal structure of the apparatus is divided into different functional modules to implement all or some of the foregoing functions.

Regarding the apparatus according to the above embodiments, specific manners of performing operations by the modules have been described in detail in the embodiments of the related method, and details are not described herein any further.

FIG. 11 is a schematic structural diagram of a terminal device 1100 according to some embodiments of the present disclosure. The terminal device 1100 may be configured to perform the method processes performed by the terminal device in the above embodiments. The terminal device 1100 may include a processor 1101, a transceiver 1102, and a memory 1103. The processor 1101 is configured to implement the functions of the above processing module 930, and the transceiver 1102 is configured to implement the functions of the above receiving module 910 and/or transmitting module 920.

The processor 1101 includes at least one processing core. The processor 1101 various functional applications and perform information processing by running one or more software programs and modules. The processor 1101 is configured to perform other processes performed by the terminal device in the above method embodiments except for the receiving and transmitting processes.

The transceiver 1102 may include a receiver and a transmitter. For example, the receiver and the transmitter may be implemented as a same wireless communication component, and the wireless communication component may include a wireless communication chip and a radio frequency (RF) antenna. The transceiver 1102 is configured to perform the receiving process and/or the transmitting process performed by the terminal device in the above method embodiments.

The memory 1103 may be connected to the processor 1101 and the transceiver 1102.

The memory 1103 may be configured to store one or more computer programs run by the processor, and the processor 1101 is configured to run the computer program to implement each process performed by the terminal device in the above method embodiments.

In addition, the memory 1103 may be practiced by any type of volatile or non-volatile storage device or a combination thereof. The volatile or non-volatile storage device includes but is not limited to: a magnetic disk or an optical disc, an electrically erasable programmable read-only memory (EEPROM), an erasable programmable read-only memory (EPROM), a static random-access memory (SRAM), a read-only memory (ROM), a magnetic memory, a flash memory, or a programmable read-only memory (PROM).

In some embodiments, the transceiver 1102 is configured to monitor and/or receive a first downlink channel or signal within a first time period.

For details not described in the above embodiments, reference may be made to the description in the above method embodiments, and details are not described herein any further.

FIG. 12 is a schematic structural diagram of a network device 1200 according to some embodiments of the present disclosure. The network device 1200 may be configured to perform the method processes performed by the network device in the above embodiments. The network device 1200 may include a processor 1201, a transceiver 1202, and a memory 1203. The processor 1201 is configured to implement the functions of the above processing module 1030, and the transceiver 1202 is configured to implement the functions of the above receiving module 1020 and/or transmitting module 1010.

The processor 1201 includes at least one processing core. The processor 1201 various functional applications and perform information processing by running one or more software programs and modules. The processor 1201 is configured to perform other processes performed by the network device in the above method embodiments except for the receiving and transmitting processes.

The transceiver 1202 may include a receiver and a transmitter. For example, the transceiver 1202 may include a wired communication component, and the wired communication component may include a wired communication chip and a wired interface (for example, a fiber interface). In some embodiments, the transceiver 1202 may also include a wireless communication component, and the wireless communication component may include a wireless communication chip and an RF antenna. The transceiver 1202 is configured to perform the receiving process and/or the transmitting step performed by the network device in the above method embodiments.

The memory 1203 may be connected to the processor 1201 and the transceiver 1202.

The memory 1203 may be configured to store one or more computer programs run by the processor, and the processor 1201 is configured to run the computer program to implement each process performed by the network device in the above method embodiments.

**In** addition, the memory 1203 may be practiced by any type of volatile or non-volatile storage device or a combination thereof. The volatile or non-volatile storage device includes but is not limited to: a magnetic disk or an optical disc, an EEPROM, an EPROM, a SRAM, a ROM, a magnetic memory, a flash memory, or a PROM.

**In** some embodiments, the transceiver 1202 is configured to transmit first configuration information to a terminal device, wherein the first configuration information is used for determining a first time period for monitoring and/or receiving a first downlink channel or signal.

For details not described in the embodiments, reference may be made to the description in the above embodiments, and details are not described herein any further.

Some embodiments of the present disclosure further provide a computer-readable storage medium. The storage medium stores one or more computer programs, and the computer programs, when loaded and run by a processor of a terminal device, cause the terminal device to implement the foregoing method for wireless communication on the terminal device side.

The embodiments of the present disclosure further provide a computer-readable storage medium. The storage medium stores one or more computer programs, and the computer programs, when loaded and run by a processor of a network device, cause the network device to implement the foregoing method for wireless communication on the network device side.

In some embodiments, the computer-readable storage medium may include a ROM, a random-access memory (RAM), a solid-state drive (SSD), an optical disc, or the like. The RAM may include a resistance random access memory (ReRAM) and a dynamic random-access memory (DRAM).

The embodiments of the present disclosure further provide a chip, including a programmable logic circuit and/or one or more program instructions. The chip, when run on a terminal device, cause the terminal device to implement the foregoing method for wireless communication on the terminal device side.

The embodiments of the present disclosure further provide a chip, including a programmable logic circuit and/or one or more program instructions. The chip, when run on a network device, cause the network device to implement the foregoing method for wireless communication on the network device side.

The embodiments of the present disclosure further provide a computer program product or a computer program. The computer program product or the computer program includes one or more computer instructions stored in a computer-readable storage medium. The one or more computer instructions, when read from the computer-readable storage medium and executed by a processor of a terminal device, cause the terminal device to implement the foregoing method for wireless communication on the terminal device side.

The embodiments of the present disclosure further provide a computer program product or a computer program. The computer program product or the computer program includes one or more computer instructions stored in a computer-readable storage medium. The one or more computer instructions, when read from the computer-readable storage medium and executed by a processor of a network device, cause the network device to implement the foregoing method for wireless communication on the network device side.

It should be understood that the term "indication" mentioned in the embodiments of the present disclosure may be a direct indication, an indirect indication, or an indication that an association relationship is present. For example, "A indicates B" may mean that A directly indicates B, for example, B may be obtained through A; or may mean that A indirectly indicates B, for example, A indicates C through which B may be obtained; or may mean an association relationship is present between A and B.

**In** the description of the embodiments of the present disclosure, the term "corresponding" may indicate a direct corresponding relationship or an indirect corresponding relationship between two items, or an association relationship between the two items, or a relationship such as indicating and being indicated, configuring and being configured, or the like.

**In** some embodiments of the present disclosure, the term "predefinition" may be implemented by pre-storing a corresponding code, a corresponding table, or another method that may be used to indicate relevant information in a device (such as a terminal device or a network device), and a specific implementation thereof is not limited in the present disclosure. For example, the term "predefined" may be "defined" in a protocol.

**In** some embodiments of the present disclosure, the term "protocol" may be a standard protocol in the field of communication, and for example, may include an LTE protocol, an NR protocol, and a related protocol applicable to a future communication system. This is not limited in the present disclosure.

The term "a plurality of" herein means two or more. The term "and/or" describes an association relationship of associated objects, and it indicates three types of relationships. For example, the phrase "A and/or B" means (A), (B), or (A and B). The character "/" usually indicates an "or" relationship between the associated objects.

**In** addition, the serial numbers of the processes described herein only exemplifies one possible execution sequence among the processes. In some other embodiments, the above processes may also be executed without following the numbering sequence. For example, two processes with different serial numbers are executed simultaneously or in an order reverse to the order shown in the figures. This is not limited in the embodiments of the present disclosure.

A person skilled in the art should be aware that in the foregoing one or more examples, the functions described in the embodiments of the present disclosure may be implemented by hardware, software, firmware, or any combination thereof. The functions, when implemented by software, may be stored in a computer-readable medium or transmitted as at least one instruction or code on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

Described above is merely exemplary embodiments of the present disclosure and is not intended to limit the present disclosure. Any modification, equivalent replacement, and improvement, and the like, made within the spirit and principle of the present disclosure shall be fall within the protection scope of the present disclosure.

## Claims

1. A method for wireless communication, applicable to a terminal device, the method comprising:
monitoring and/or receiving a first downlink channel or signal within a first time period.

2. The method according to claim 1, wherein the first time period is determined based on a time-domain position of a first uplink resource.

3. The method according to claim 2, wherein the first time period being determined based on the time-domain position of the first uplink resource comprises:
a time-domain resource of the first time period being determined based on the time-domain position of the first uplink resource; or
a start position of the first time period being determined based on the time-domain position of the first uplink resource.

4. The method according to claim 3, wherein the start position of the first time period being determined based on the time-domain position of the first uplink resource comprises:
the start position of the first time period being an end position of the first uplink resource; or
the start position of the first time period being an end position of a time unit in which the first uplink resource is located; or
a first offset value being present between the start position of the first time period and an end position of the first uplink resource; or
a first offset value being present between the start position of the first time period and an end position of a time unit in which the first uplink resource is located; or
the start position of the first time period being a start position of a first downlink resource following the first uplink resource; or
the start position of the first time period being a start position of a time unit in which a first downlink resource following the first uplink resource is located; or
the start position of the first time period being a start position of a first downlink resource that follows the first uplink resource and is offset by a first offset value; or
the start position of the first time period being a start position of a time unit in which a first downlink resource that follows the first uplink resource and experiences a first offset value is located.

5. The method according to claim 4, wherein
the first offset value is determined based on a parameter predefined in a protocol; or
the first offset value is determined based on a configuration parameter of a network device.

6. The method according to any one of claims 2 to 5, wherein prior to monitoring and/or receiving the first downlink channel or signal within the first time period, the method further comprises:
transmitting a first uplink channel or signal over the first uplink resource.

7. The method according to claim 6, wherein subsequent to transmitting the first uplink channel or signal over the first uplink resource, the method further comprises:
determining the start position of the first time period based on the time-domain position of the first uplink resource.

8. The method according to claim 6 or 7, wherein
an uplink resource within the first time period is not used for transmitting the first uplink channel or signal; or
an uplink resource within a second time period is not used for transmitting the first uplink channel or signal, wherein the second time period follows the time-domain position of the first uplink resource and is different from the first time period.

9. The method according to any one of claims 6 to 8, further comprising:
retransmitting the first uplink channel or signal upon elapse of the first time period in a case that the first downlink channel or signal is not monitored and/or received by the terminal device within the first time period; or
retransmitting the first uplink channel or signal upon elapse of a second time period in a case that the first downlink channel or signal is not monitored and/or received by the terminal device within the first time period, wherein the second time period follows the time-domain position of the first uplink resource and is different from the first time period.

10. The method according to any one of claims 2 to 9, wherein
the first uplink resource comprises a network device wake-up signal resource configured for the terminal device to transmit a network device wake-up signal; and/or
the first uplink channel or signal comprises a network device wake-up signal.

11. The method according to claim 1, wherein the first time period is determined based on a time-domain position of a first downlink resource.

12. The method according to claim 11, wherein the first time period being determined based on the time-domain position of the first downlink resource comprises:
a time-domain resource of the first time period being determined based on the time-domain position of the first downlink resource; or
a start position of the first time period being determined based on the time-domain position of the first downlink resource.

13. The method according to claim 11 or 12, wherein the first downlink resource is a downlink resource within a third time period corresponding to a sleep mode of a network device.

14. The method according to any one of claims 11 to 13, wherein the start position of the first time period being determined based on the time-domain position of the first downlink resource comprises:
the start position of the first time period being a start position of the first downlink resource; or
the start position of the first time period being a start position of a time unit in which the first downlink resource is located; or
the start position of the first time period being a start position of a first downlink resource whose start position is after a start position of the third time period and is offset by a second offset value; or
the start position of the first time period being a start position of a time unit in which a first downlink resource whose start position is after a start position of the third time period and is offset by a second offset value is located.

15. The method according to claim 1, wherein the first time period is determined based on a third time period corresponding to a sleep mode of a network device.

16. The method according to claim 15, wherein the third time period comprises:
a time period within which the network device is in the sleep mode; or
a time period corresponding to a transition time for the network device to enter the sleep mode, and/or a time period corresponding to a transition time for the network device to exit the sleep mode.

17. The method according to claim 15 or 16, wherein the third time period comprises a time period corresponding to a transition time for the network device to enter the sleep mode; wherein
a start position of the first time period is a start position of the third time period; or
a second offset value is present between a start position of the first time period and a start position of the third time period.

18. The method according to claim 17, wherein
the second offset value is determined based on a parameter predefined in a protocol; or
the second offset value is determined based on a configuration parameter of the network device.

19. The method according to any one of claims 13 to 18, wherein a length of the third time period is determined based on at least one of: the configuration parameter of the network device, a communication transmission requirement of the network device, or a communication transmission requirement of the terminal device, wherein
the communication transmission requirement of the network device comprises at least one of: downlink service transmission of the network device to at least one terminal device, uplink service transmission of the network device to at least one terminal device, paging message transmission of the network device, system message transmission of the network device, synchronization signal and physical broadcast channel (PBCH) block (SSB) transmission of the network device, downlink reference signal transmission of the network device, physical random access channel (PRACH) detection of the network device, or uplink reference signal transmission of the network device; and
the communication transmission requirement of the terminal device comprises at least one of: downlink service transmission of the terminal device, uplink service transmission of the terminal device, paging message transmission of the terminal device, system message transmission requested by the terminal device, SSB transmission requested by the terminal device, downlink reference signal transmission of the terminal device, PRACH transmission of the terminal device, or uplink reference signal transmission of the terminal device.

20. The method according to any one of claims 11 to 19, wherein prior to monitoring and/or receiving the first downlink channel or signal within the first time period, the method further comprises:
determining a start position of the first time period.

21. The method according to any one of claims 1 to 20, wherein
a length of the first time period is determined based on a length of a first timer, wherein a startup or restart time of the first timer is a time corresponding to a start position of the first time period; or
a length of the first time period is determined based on a length of a first window, wherein a start position of the first window is a start position of the first time period.

22. The method according to any one of claims 1 to 21, wherein a length of the first time period is determined based on a configuration parameter of a network device.

23. The method according to claim 4 or 11, wherein
the first downlink resource is a terminal device wake-up signal resource configured for the terminal device; or
the first downlink resource is a resource corresponding to a physical downlink control channel (PDCCH) search space configured for the terminal device.

24. The method according to any one of claims 1 to 23, wherein monitoring and/or receiving the first downlink channel or signal within the first time period comprises:
monitoring a terminal device wake-up signal and/or a physical downlink control channel (PDCCH) candidate corresponding to a PDCCH search space within the first time period.

25. The method according to claim 24, wherein monitoring the terminal device wake-up signal and/or the PDCCH candidate corresponding to the PDCCH search space within the first time period comprises:
monitoring the terminal device wake-up signal within the first time period in a case that the terminal device is configured with a terminal device wake-up signal resource; or
monitoring the PDCCH candidate corresponding to the PDCCH search space within the first time period in a case that the terminal device is not configured with a terminal device wake-up signal resource.

26. The method according to claim 24, wherein monitoring the terminal device wake-up signal and/or the PDCCH candidate corresponding to the PDCCH search space within the first time period comprises:
monitoring the terminal device wake-up signal in a case that a time-domain position of a terminal device wake-up signal resource is before a time-domain position of a resource corresponding to the PDCCH search space within the first time period; or
monitoring the PDCCH candidate corresponding to the PDCCH search space in a case that a time-domain position of a resource corresponding to the PDCCH search space is before a time-domain position of a terminal device wake-up signal resource within the first time period.

27. The method according to claim 26, further comprising:
monitoring the terminal device wake-up signal in a case that a time-domain position of a first terminal device wake-up signal resource is before a time-domain position of a resource corresponding to a first PDCCH search space within the first time period; or
monitoring the PDCCH candidate corresponding to the PDCCH search space in a case that a time-domain position of a resource corresponding to a first PDCCH search space is before a time-domain position of a first terminal device wake-up signal resource within the first time period.

28. The method according to claim 27, wherein monitoring the PDCCH candidate corresponding to the PDCCH search space in the case that the time-domain position of the resource corresponding to the first PDCCH search space is before the time-domain position of the first terminal device wake-up signal resource comprises:
monitoring the PDCCH candidate corresponding to the PDCCH search space before the time-domain position of the first terminal device wake-up signal resource; or
monitoring the terminal device wake-up signal starting from the time-domain position of the first terminal device wake-up signal resource.

29. The method according to any one of claims 24 to 28, wherein monitoring the terminal device wake-up signal comprises:
monitoring a PDCCH candidate corresponding to a PDCCH search space associated with the terminal device wake-up signal in a case that the terminal device wake-up signal is monitored by the terminal device; or
not monitoring a PDCCH candidate corresponding to a PDCCH search space associated with the terminal device wake-up signal in a case that the terminal device wake-up signal is not monitored by the terminal device.

30. The method according to any one of claims 1 to 29, further comprising:
not monitoring the terminal device wake-up signal and/or the PDCCH candidate corresponding to the PDCCH search space upon elapse of the first time period.

31. A method for wireless communication, applicable to a network device, the method comprising:
transmitting first configuration information to a terminal device, wherein the first configuration information is used for determining a first time period to monitor and/or receive a first downlink channel or signal.

32. The method according to claim 31, wherein the first configuration information is used for determining a length of the first time period.

33. The method according to claim 32, wherein the first configuration information being used for determining the length of the first time period comprises:
the first configuration information being used for determining a length of a first timer, wherein the length of the first time period is the length of the first timer; or
the first configuration information being used for determining a length of a first window, wherein the length of the first time period is the length of the first window.

34. The method according to any one of claims 31 to 33, wherein the first configuration information is used for determining a first uplink resource, wherein the first time period is determined based on a time-domain position of the first uplink resource.

35. The method according to claim 34, wherein the first uplink resource comprises a network device wake-up signal resource, and the first configuration information is used for determining the network device wake-up signal resource.

36. The method according to claim 35, further comprising:
monitoring a network device wake-up signal on the network device wake-up signal resource.

37. The method according to claim 36, further comprising:
transmitting a PDCCH to the terminal device over a PDCCH search space in a case that the network device wake-up signal is monitored by the network device; or
not transmitting a PDCCH to the terminal device over a PDCCH search space in a case that the network device wake-up signal is not monitored by the network device.

38. The method according to any one of claims 31 to 33, wherein the first configuration information is used for determining a first downlink resource, and the first time period is determined based on a time-domain position of the first downlink resource.

39. The method according to claim 38, wherein the first downlink resource comprises a terminal device wake-up signal resource, and the first configuration information is used for determining the terminal device wake-up signal resource.

40. The method according to claim 39, further comprising:
transmitting a terminal device wake-up signal to the terminal device over the terminal device wake-up signal resource within a third time period corresponding to a sleep mode of the network device.

41. The method according to any one of claims 31 to 33, wherein the first configuration information is used for determining a network device wake-up signal resource and a terminal device wake-up signal resource.

42. The method according to claim 41, further comprising:
transmitting a terminal device wake-up signal to the terminal device over the terminal device wake-up signal resource in a case that a network device wake-up signal is monitored by the network device.

43. The method according to claim 41, further comprising:
transmitting a terminal device wake-up signal to the terminal device over the terminal device wake-up signal resource in a case that a network device wake-up signal is monitored by the network device and a time-domain position of the terminal device wake-up signal resource is before a time-domain position of a resource corresponding to a PDCCH search space; or
transmitting a PDCCH to the terminal device over a PDCCH search space in a case that a network device wake-up signal is monitored by the network device and a time-domain position of a resource corresponding to the PDCCH search space is before a time-domain position of the terminal device wake-up signal resource; or
not transmitting a terminal device wake-up signal to the terminal device over the terminal device wake-up signal resource and a PDCCH to the terminal device over a PDCCH search space in a case that a network device wake-up signal is not monitored by the network device.

44. The method according to claim 43, further comprising:
transmitting the terminal device wake-up signal to the terminal device over the terminal device wake-up signal resource in a case that the network device wake-up signal is monitored by the network device and a time-domain position of a first terminal device wake-up signal resource is before a time-domain position of a resource corresponding to a first PDCCH search space; or
transmitting the PDCCH to the terminal device over the PDCCH search space in a case that the network device wake-up signal is monitored by the network device and a time-domain position of a resource corresponding to a first PDCCH search space is before a time-domain position of a first terminal device wake-up signal resource.

45. The method according to claim 44, further comprising:
transmitting the PDCCH to the terminal device over the PDCCH search space before the time-domain position of the first terminal device wake-up signal resource; or
transmitting the terminal device wake-up signal to the terminal device over the terminal device wake-up signal resource starting from the time-domain position of the first terminal device wake-up signal resource.

46. The method according to any one of claims 40 and 42 to 45, wherein subsequent to transmitting the terminal device wake-up signal to the terminal device over the terminal device wake-up signal resource, the method further comprises:
transmitting the PDCCH to the terminal device over a PDCCH search space associated with the terminal device wake-up signal.

47. The method according to claim 37 or 43, the PDCCH search space is a PDCCH search space associated with the network device wake-up signal.

48. The method according to any one of claims 31 to 47, wherein the first configuration information is used for determining a third time period corresponding to a sleep mode of the network device, and the first time period is determined based on the third time period.

49. The method according to claim 48, wherein the third time period comprises:
a time period within which the network device is in the sleep mode; or
a time period corresponding to a transition time for the network device to enter the sleep mode, and/or a time period corresponding to a transition time for the network device to exit the sleep mode.

50. The method according to any one of claims 31 to 49, wherein the first configuration information is used for determining a first offset value and/or a second offset value, wherein the first offset value and/or the second offset value are/is used for determining the first time period.

51. The method according to any one of claims 31 to 50, wherein the first configuration information comprises at least one piece of configuration information.

52. The method according to any one of claims 31 to 51, wherein the first configuration information comprises at least one of a system message, radio resource control (RRC) signaling, a medium access control (MAC) control element (CE), or downlink control information (DCI).

53. An apparatus for wireless communication, comprising:
a receiving module, configured to monitor and/or receive a first downlink channel or signal within a first time period.

54. A method for wireless communication, wherein the apparatus for wireless communication, comprising:
a transmitting module, configured to transmit first configuration information to a terminal device, wherein the first configuration information is used for determining a first time period to monitor and/or receive a first downlink channel or signal.

55. A terminal device, comprising: a processor and a memory, wherein the memory is configured to store one or more computer programs, wherein the processor, when loading and running the one or more computer programs, is caused to perform the method as defined in any one of claims 1 to 30.

56. A network device, comprising: a processor and a memory, wherein the memory is configured to store one or more computer programs, wherein the processor, when loading and running the one or more computer programs, is caused to perform the method as defined in any one of claims 31 to 52.

57. A computer-readable storage medium, storing one or more computer programs, wherein the one or more computer programs, when loaded and run by a processor, cause the processor to perform the method as defined in any one of claims 1 to 30 or the method as defined in any one of claims 31 to 52.

58. A chip, comprising: a programmable logic circuit and/or one or more program instructions, wherein the chip, when running, is caused to perform the method as defined in any one of claims 1 to 30 or the method as defined in any one of claims 31 to 52.

59. A computer program product, comprising: one or more computer instructions stored in a computer-readable storage medium, and the one or more computer instructions, when read from the computer-readable storage medium and executed by a processor, cause the processor to perform the method as defined in any one of claims 1 to 30 or the method as defined in any one of claims 31 to 52.

60. A system for wireless communication, comprising: a terminal device and a network device, wherein the terminal device is configured to perform the method as defined in any one of claims 1 to 30, and/or the network device is configured to perform the method as defined in any one of claims 31 to 52.
